(19)

**Europäisches Patentamt**
**European Patent Office**
**Office européen des brevets**

(11)  **EP 4 582 377 A1**

(12)  **EUROPEAN PATENT APPLICATION**

(43) Date of publication:
**09.07.2025  Bulletin 2025/28**

(21) Application number: **24150498.4**

(22) Date of filing: **05.01.2024**

(51) International Patent Classification (IPC):
**C01B 32/30** (2017.01)  **C09C 1/48** (2006.01)

(52) Cooperative Patent Classification (CPC):
**C09C 1/48; C01B 32/30**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Orion Engineered Carbons GmbH**
**65760 Eschborn (DE)**

(72) Inventors:
• **SCHINKEL, Arndt-Peter**
**56112 Lahnstein (DE)**

• **BOWLES, Alexander**
**50939 Köln (DE)**
• **WIDJAJA, Andreas**
**64521 gross-Gerau (DE)**
• **STANYSCHÖFSKY, Michael**
**50354 Hürth (DE)**
• **DETERS, David**
**53173 Bonn (DE)**
• **TIMMERMANS, Eddy**
**50354 Hürth (DE)**

(74) Representative: **f & e patent**
**Braunsberger Feld 29**
**51429 Bergisch Gladbach (DE)**

(54)  **PYROLYSIS AND GASIFICATION OF RUBBER GRANULATE**

(57)  The present invention relates to a method for providing treated carbon black. A particulate carbon black-containing feedstock, such as waste tire rubber granulate, is used as a feedstock for a pyrolysis process and a subsequent gasification of the pyrolyzed material. It is believed that the obtained treated carbon black has a lower coke content and thus, the resulting rubber articles have improved properties.

FIG. 6

EP 4 582 377 A1

**Description**

**TECHNICAL FIELD**

The present invention relates to a method for providing treated carbon black. A particulate carbon black-containing feedstock, such as waste tire rubber granulate, is used as a feedstock for a pyrolysis process and a subsequent gasification of the pyrolyzed material. It is believed that the obtained treated carbon black has a lower coke content and thus, the resulting rubber articles have improved properties.

**TECHNICAL BACKGROUND**

Carbon blacks have numerous uses such as a reinforcing agent or filler for the rubber and tire industries. Moreover, carbon black has seen increased use in other areas such as coloring agents and reprographic toners for copying machines. The various applications of carbon black necessitate a diverse range of carbon black characteristics such as particle size, structure, yield, surface area, and stain.

Recycled blacks are carbon blacks typically obtained from end-of-life products containing carbon black, such as scrap tires (waste tires), and obtained by recycling processes. Production of recycled blacks typically involves 1 to 3 processes. Firstly, a pyrolysis step is deployed to decompose organic components such as rubbers or plastics. Secondly, an optional demineralization step is deployed to dissolve inorganic additives or impurities. Thirdly, the resulting material is milled to produce a controlled particle size distribution.

Tire pyrolysis of end-of-life products containing carbon black is usually carried out at low temperatures and produces a liquid, gaseous and solid fraction. The liquid fraction can then be used to produce new or virgin carbon black in an entrained flow reactor such as a furnace reactor. US 2002/0117388 A1 relates to the pyrolysis of waste rubber materials, including scrap tires. The obtained carbon black is generally referred to as "recovered carbon black" (rCB).

rCB is a complex mixture resulting from the compounds used in pyrolysis. The compounds used in the pyrolysis process may contain various components (i.e. ash) other than carbon black, such as inorganic additives and fillers (e.g., zinc oxide, silicon oxide, sulphur compounds and calcium carbonate) and traces of steel.

However, the performance of rCB is generally poor compared to carbon black produced from e.g., a standard hydrocarbon feedstock such as oil. Accordingly, it is desired to produce carbon black from a particulate carbon black-containing feedstock in which the produced carbon black has improved properties.

It has been surprisingly found that the pyrolysis of particulate carbon black - containing feedstock, such as rubber granulate, and subsequent gasification of the material lead to an improved carbon black compared to rCB.

**SUMMARY OF THE INVENTION**

The present invention relates to a method for the recycling of carbon black comprising: (a) pyrolysis of particulate carbon black-containing feedstock at a temperature of 360 °C to 740 °C and in the absence of oxygen, wherein a pyrolysis gas stream and a pyrolyzed carbon black-containing particulate are obtained, (b) gasification of the pyrolyzed carbon black-containing particulate at a temperature of 750 °C to 950 °C, (c) obtaining treated carbon black after the gasification.

Furthermore, the present invention relates to the use of a multiple hearth furnace for the pyrolysis and gasification of rubber granulate, such as waste tire rubber granulate.

In addition, a treated carbon black is provided wherein the treated carbon black has a transmittance of at least 80 %, preferably at least 85 %, more preferably at least 90 %, even more preferably at least 95 %, most preferably at least 98 % wherein the transmittance at 355 nm in toluene is measured according to ASTM D 1618-18 against toluene, wherein the transmittance is measured at 355 nm instead of 425 nm.

**BRIEF DESCRIPTION OF THE DRAWINGS**

Figure 1 (FIG. 1): Section of a furnace reactor
Figure 2 (FIG. 2): Feeding and mixing device comprising a nozzle
Figure 3 (FIG. 3): Laval-nozzle for the feeding and mixing device
Figure 4 (FIG. 4): Deagglomeration conduit for the feeding and mixing device
Figure 5 (FIG. 5): Feeding and mixing device without a nozzle
Figure 6 (FIG. 6): Multi-layered pyrolysis reactor

## DETAILED DESCRIPTION

It must be noted that, as used in the specification and the appended claims, the singular forms "a," "an" and "the" include plural referents unless the context clearly dictates otherwise. Thus, for example, reference to "an oxygen-containing gas" includes mixtures of oxygen-containing gases, reference to "a fuel" includes mixtures of two or more such fuels, and the like.

As used herein, the term "comprising" is understood to be open-ended and to not exclude the presence of additional undescribed or unrecited elements, materials, ingredients or method steps etc. The terms "including", "containing" and like terms are understood to be synonymous with "comprising". As used herein, the term "consisting of" is understood to exclude the presence of any unspecified element, ingredient or method step etc.

Unless indicated to the contrary, the numerical parameters and ranges set forth in the following specification and appended claims are approximations. Notwithstanding that the numerical ranges and parameters setting forth the broad scope of the invention are approximations, the numerical values set forth in the specific examples are reported as precisely as possible. Any numerical values, however, contain errors necessarily resulting from the standard deviation in their respective measurement.

Also, it should be understood that any numerical range recited herein is intended to include all subranges subsumed therein. For example, a range of "1 to 10" is intended to include any and all sub-ranges between and including the recited minimum value of 1 and the recited maximum value of 10, that is, all subranges beginning with a minimum value equal to or greater than 1 and ending with a maximum value equal to or less than 10, and all subranges in between, e.g., 1 to 6.3, or 5.5 to 10, or 2.7 to 6.1.

All parts, amounts, concentrations etc. referred to herein are by weight, unless specified otherwise. If no basis for parts, amounts, concentrations etc. are indicated, the parts, amounts, concentrations etc. are based on the respective composition/atmosphere/gas in which the respective material/parameter etc. is present.

The expression "feedstock" refers to the feedstock for the recycling of carbon black. According to the present invention, a particulate carbon black-containing feedstock is used for the recycling of carbon black. The expression or abbreviation feedstock used in the present disclosure refers to the particulate carbon black-containing feedstock.

"Carbon black" as referred to herein means a material composed substantially, e.g. to more than 50 wt.%, or more than 70 wt.% or more than 80 wt.%, based on its total weight of carbon that is produced by pyrolysis or radical driven abstraction of not carbon atoms of a carbon black feedstock. Different industrial processes are known for the production of carbon blacks such as the furnace process, gas black process, acetylene black process, thermal black process or lamp black process. The production of carbon blacks is per se well known in the art and for example outlined in J.-B. Donnet et al., "Carbon Black:Science and Technology", 2nd edition, therefore being not described herein in more detail. However, it is possible that "carbon black" comprises impurities as mentioned further below.

As used herein, the term "rubber articles" refers to articles composed of rubber, e.g., composed of at least 40 wt.-% of rubber, based on the total weight of the rubber article. Examples of rubber articles include, but are not limited to, tires, conveyer belts, gaskets, such as door gaskets, drive belts, floor mats, shoe soles, belts, cable sheaths, hoses, and the like. Preferred rubber articles include tires. The term "rubber" includes both natural and synthetic rubbers or mixtures thereof. Natural rubber (polyisoprene) may be obtained from rubber trees (Helvea brasiliensis), guayule, and dandelion. Synthetic rubber may comprise styrene-butadiene rubber such as emulsion-styrene-butadiene rubber and solution-styrene-butadiene rubber, polybutadiene, polyisoprene, ethylene-propylene-diene rubber, ethylene-propylene rubber, butyl rubber, halogenated butyl rubber, chlorinated polyethylene, chlorosulfonated polyethylene, acrylonitrile-butadiene rubber, hydrogenated acrylonitrile-butadiene rubber, polychloroprene, acrylate rubber, ethylene-vinylacetate rubber, ethylene-acrylic rubber, epichlorohydrin rubber, silicone rubber, fluorosilicone rubber, fluorocarbon rubber or mixture of combinations of any of the foregoing.

The expression "material" refers to the material that is treated, such as the material that is subjected to gasification after the pyrolysis step.

The present invention relates to a method for the recycling of carbon black comprising: (a) pyrolysis of particulate carbon black-containing feedstock at a temperature of 360 °C to 740 °C and in the absence of oxygen, wherein a pyrolysis gas stream and a pyrolyzed carbon black-containing particulate are obtained, (b) gasification of the pyrolyzed carbon black-containing particulate at a temperature of 750 °C to 950 °C, (c) obtaining treated carbon black after the gasification.

The pyrolysis of rubber articles generally involves heating the rubber articles to temperatures, e.g., of at least 360 °C in the absence of oxygen in order to volatilize and decompose the rubber articles, producing oil, gas (pyrolysis gas), and char. The expression "pyrolyzed carbon black-containing particulate" is used for the expression "char" alternatively.

The pyrolysis (a) and gasification (b) can be carried out in separate processes. For instance, the pyrolysis can be carried out in rotary kiln and/or in a multi-layered pyrolysis reactor. The pyrolyzed carbon black-containing particulate can be milled before subjected to the gasification (b). A reduced particle size generally results in a more efficient pyrolysis and gasification. The obtained pyrolyzed carbon black-containing particulate is then subjected to the gasification. The gasification can be carried out in a fluidized bed reactor, auger reactor, batch reactor, fixed bed reactor, electric furnace and/or rotary kiln. Accordingly, the pyrolysis (a) can carried out in a first reactor and the gasification (b) can be carried out in a second reactor, wherein the first reactor and the second reactor are different reactors.

It is also possible that the pyrolysis (a) and gasification (b) are carried out as a continuous process. For instance, the pyrolysis (a) and gasification (b) are carried out in a multi-layered pyrolysis reactor, such as a multiple hearth furnace. In a multi-layered pyrolysis reactor, the pyrolysis is generally performed in the pyrolysis zone of the reactor and the gasification is performed in the gasification zone of the reactor. Accordingly, the entire process is a continuous process wherein the material after the pyrolysis is subjected directly to the gasification, i.e. both processes are carried out in one reactor.

Accordingly, it is desired to use a multiple hearth furnace for the pyrolysis and gasification of rubber granulate, such as waste tire rubber granulate.

It is intended that the pyrolysis zone is above the gasification zone. In other words, upper hearths are used for the pyrolysis and the lower hearts are used for the gasification. For instance, hearths 1 to 2 are used for the pyrolysis and hearths 3 to 6 are used for the gasification.

The pyrolysis of particulate carbon black-containing feedstock can be carried out in an inert atmosphere, preferably in a nitrogen atmosphere. The pyrolysis of the particulate carbon black-containing feedstock can be carried out in an inert atmosphere, preferably in a hydrogen atmosphere. In this context, atmosphere should refer to the gaseous environment in which the material, such as the particulate carbon black-containing feedstock, is treated.

Pyrolysis can be carried out in a reaction chamber and the oxygen content (in forms of $O_2$) in the reaction chamber should be less than 10000 ppm, preferably 1000 ppm, based on the total weight of the atmosphere in the reaction chamber. It is particularly preferred that no oxygen is present and/or supplied in the reaction chamber for the pyrolysis. It is particularly preferred that no oxygen is supplied into the reaction chamber for the pyrolysis. For a multi-layered pyrolysis reactor, the reactor chamber for the pyrolysis can refer to the hearths in which the pyrolysis takes place.

During the pyrolysis a pyrolysis gas is generally obtained. The pyrolysis gas stream can be used to at least partially heat the pyrolysis (a) process and/or the gasification (b) process. For instance, the pyrolysis gas comprises hydrogen. The hydrogen or the pyrolysis gas can be used as fuel for a burner to at least partially heat the pyrolysis (a) process and/or the gasification (b) process. Accordingly, a sustainable pyrolysis process can be achieved.

The pyrolysis of particulate carbon black-containing feedstock can be carried out at a temperature of 380 °C to 730 °C, preferably 400 to 680 °C, more preferably 450 to 650 °C, and most preferably 490 to 600 °C. The temperature during the pyrolysis should be controlled so that no gasification takes place. Generally, a temperature of 750 °C or more is necessary for the gasification.

A pyrolysis gas stream and a pyrolyzed carbon black-containing particulate are obtained. However, it is also possible that a liquid fraction, such as oil, is obtained. Oil can be obtained by pyrolysis at low temperatures such as 360 °C.

The pyrolysis of particulate carbon black-containing feedstock can be carried out at an absolute pressure of 0.5 to 2 bar, preferably 0.7 to 1.5 bar, more preferably 0.8 to 1.3 bar, and most preferably 0.9 to 1.1 bar. Accordingly, the reactor for the pyrolysis (and/or gasification) can be or comprises a pressure vessel.

It is desired that the residence time of the particulate carbon black-containing feedstock for the pyrolysis (a) is as low as possible. This means that the heat transfer should be high that can be achieved by decreasing the particle size of the particulate carbon black-containing feedstock or by decreasing the bed depth in the reactor. The bed depth refers to the height of the material to be treated in the reactor. It should be noted that in a multiple hearth furnace (MHF) the bed depth is the depth of the material that is present in a hearth and moved by the rabble arms. The rabble arms have a small gap between each rabble tines and the surface of the hearth. The material that is not moved, conveyed by the rabble arms are considered as being not treated. Thus the depth of such material is considered as dead bed depth. The dead bed depth is usually 1 to 6 cm, such as 2 to 5 cm. The distance between the tines of the rabble arms and the hearth generally defines the dead bed depth. Accordingly, the bed depth can be alternatively expressed as the moving bed depth. In other words, the moving bed depth relates to the material transported by the rabble arms. Generally, the bed depth as used herein refers to the average bed depth.

For instance, a lower bed depth results in a better heat transfer and thus, the pyrolysis is more effective.

The bed depth of the particulate carbon black-containing feedstock can be from 0.5 to 10 cm, preferably 1 to 5 cm, more preferably 1 to 3 cm, and most preferably 1.5 to 2.5 cm. The average bed depth of the particulate carbon black-containing feedstock can be from 0.5 to 10 cm, preferably 1 to 5 cm, more preferably 1 to 3 cm, and most preferably 1.5 to 2.5 cm. The bed depth of the particulate carbon black-containing feedstock in the pyrolysis zone can be from 0.5 to 10 cm, preferably 1 to 5 cm, more preferably 1 to 3 cm, and most preferably 1.5 to 2.5 cm. The bed average depth of the particulate carbon black-containing feedstock in the pyrolysis zone can be from 0.5 to 10 cm, preferably 1 to 5 cm, more preferably 1 to 3 cm, and most preferably 1.5 to 2.5 cm. The bed depth of the particulate carbon black-containing feedstock in the gasification zone can be from 0.5 to 10 cm, preferably 2 to 8 cm, more preferably 2 to 7 cm, and most preferably 2.5 to 5 cm. The bed average depth of the particulate carbon black-containing feedstock in the gasification zone can be from 0.5 to 10 cm, preferably 2 to 8 cm, more preferably 2 to 7 cm, and most preferably 2.5 to 5 cm.

The moving bed depth of the particulate carbon black-containing feedstock can be from 0.5 to 10 cm, preferably 1 to 5 cm, more preferably 1 to 3 cm, and most preferably 1.5 to 2.5 cm. The moving average bed depth of the particulate carbon black-containing feedstock can be from 0.5 to 10 cm, preferably 1 to 5 cm, more preferably 1 to 3 cm, and most preferably 1.5 to 2.5 cm. The moving bed depth of the particulate carbon black-containing feedstock in the pyrolysis zone can be from 0.5 to 10 cm, preferably 1 to 5 cm, more preferably 1 to 3 cm, and most preferably 1.5 to 2.5 cm. The bed average depth of the particulate carbon black-containing feedstock in the pyrolysis zone can be from 0.5 to 10 cm, preferably 1 to 5 cm, more preferably 1 to 3 cm, and most preferably 1.5 to 2.5 cm. The moving bed depth of the particulate carbon black-containing feedstock in the gasification zone can be from 0.5 to 10 cm, preferably 2 to 8 cm, more preferably 2 to 7 cm, and most preferably 2.5 to 5 cm. The moving average bed depth of the particulate carbon black-containing feedstock in the gasification zone can be from 0.5 to 10 cm, preferably 2 to 8 cm, more preferably 2 to 7 cm, and most preferably 2.5 to 5 cm.

The bed depth of the particulate carbon black-containing feedstock on each hearth in a multi-layered pyrolysis reactor can be 0.5 to 10 cm, preferably 1 to 5 cm, more preferably 1 to 3 cm, and most preferably 1.5 to 2.5 cm. The average bed depth of the particulate carbon black-containing feedstock on each hearth in a multi-layered pyrolysis reactor can be 0.5 to 10 cm, preferably 1 to 5 cm, more preferably 1 to 3 cm, and most preferably 1.5 to 2.5 cm. The bed depth of the particulate carbon black-containing feedstock on each hearth in a multi-layered pyrolysis reactor in the pyrolysis zone can be 0.5 to 10 cm, preferably 1 to 5 cm, more preferably 1 to 3 cm, and most preferably 1.5 to 2.5 cm. The average bed depth of the particulate carbon black-containing feedstock on each hearth in a multi-layered pyrolysis reactor in the pyrolysis zone can be 0.5 to 10 cm, preferably 1 to 5 cm, more preferably 1 to 3 cm, and most preferably 1.5 to 2.5 cm. The bed depth of the particulate carbon black-containing feedstock on each hearth in a multi-layered pyrolysis reactor in the gasification zone can be 0.5 to 10 cm, preferably 2 to 8 cm, more preferably 2 to 7 cm, and most preferably 2.5 to 5 cm. The average bed depth of the particulate carbon black-containing feedstock on each hearth in a multi-layered pyrolysis reactor in the gasification zone can be 0.5 to 10 cm, preferably 2 to 8 cm, more preferably 2 to 7 cm, and most preferably 2.5 to 5 cm.

The moving bed depth of the particulate carbon black-containing feedstock on each hearth in a multi-layered pyrolysis reactor can be 0.5 to 10 cm, preferably 1 to 5 cm, more preferably 1 to 3 cm, and most preferably 1.5 to 2.5 cm. The moving average bed depth of the particulate carbon black-containing feedstock on each hearth in a multi-layered pyrolysis reactor can be 0.5 to 10 cm, preferably 1 to 5 cm, more preferably 1 to 3 cm, and most preferably 1.5 to 2.5 cm. The moving bed depth of the particulate carbon black-containing feedstock on each hearth in a multi-layered pyrolysis reactor in the pyrolysis zone can be 0.5 to 10 cm, preferably 1 to 5 cm, more preferably 1 to 3 cm, and most preferably 1.5 to 2.5 cm. The moving average bed depth of the particulate carbon black-containing feedstock on each hearth in a multi-layered pyrolysis reactor in the pyrolysis zone can be 0.5 to 10 cm, preferably 1 to 5 cm, more preferably 1 to 3 cm, and most preferably 1.5 to 2.5 cm. The moving bed depth of the particulate carbon black-containing feedstock on each hearth in a multi-layered pyrolysis reactor in the gasification zone can be 0.5 to 10 cm, preferably 2 to 8 cm, more preferably 2 to 7 cm, and most preferably 2.5 to 5 cm. The moving average bed depth of the particulate carbon black-containing feedstock on each hearth in a multi-layered pyrolysis reactor in the gasification zone can be 0.5 to 10 cm, preferably 2 to 8 cm, more preferably 2 to 7 cm, and most preferably 2.5 to 5 cm.

The particulate carbon black-containing feedstock with respect to the bed depth usually refer to the material/feedstock that is present on each hearth during the process.

The residence time of the particulate carbon black-containing feedstock for the pyrolysis or for the gasification generally refers to the average residence time. Particularly, the residence time and the average residence time for the pyrolysis or for the gasification refers to the residence time of the particulate carbon black-containing feedstock of the material is transported or that is moving. The residence time usually does not considered material that is not moving. For instance, material that refers to the dead bed depth in a MHF.

The residence time of the particulate carbon black-containing feedstock for the pyrolysis (a) can be from 5 to 60 min, preferably 6 to 40 min, more preferably 6 to 25 min, and most preferably 7 to 15 min. The residence time of the particulate carbon black-containing feedstock for the pyrolysis (a) on each hearth of a multi-layered pyrolysis reactor can be from 1 to 20 min, preferably 2 to 15 min, more preferably 3 to 13 min, and most preferably 4 to 10 min.

The residence time of the particulate carbon black-containing feedstock for the gasification (b) can be from 20 min to 4 h, preferably 1 h to 2.5 h, more preferably 1.5 h to 2 h. The residence time of the particulate carbon black-containing feedstock for the gasification (b) on each hearth of a multiple hearth furnace can be from 7 to 60 min, preferably 30 to 40 min.

The residence time of the material on each hearth of a multi-layered pyrolysis reactor can be from 1 to 60 min, preferably 2 to 45 min, more preferably 3 to 37 min, and most preferably 4 to 20 min.

For instance, the number of rabble arms regulates the residence time of the material on each hearth of a multiple hearth furnace.

It is preferred that the pyrolysis is carried out in rotary kiln, auger, fixed bed, a furnace reactor (entrained flow reactor), moving bed reactor, screw reactor, and/or in a multi-layered pyrolysis reactor (such as MHF) and the gasification is carried out in a fluidized bed reactor, auger reactor, batch reactor, fixed bed reactor, electric furnace and/or rotary kiln.

The particulate carbon black-containing feedstock can be heated to the required temperature for the pyrolysis (a) by using an electrical heating unit. The electrical heating unit can heat an inert gas stream, such as a nitrogen gas stream, to the required temperature and the heated inert gas stream, such as a nitrogen gas stream, is subjected to the particulate carbon black-containing feedstock for the pyrolysis (a).

The atmosphere during the pyrolysis for the particulate carbon black-containing feedstock can comprise nitrogen, preferably at least 1 vol.-% nitrogen, such as at least 3 vol.-% nitrogen, at least 5 vol.-% nitrogen, at least 15 vol.-% nitrogen, at least 20 vol.-% nitrogen, or at least 25 vol.-% nitrogen, based on the total volume of the atmosphere during the pyrolysis. During the pyrolysis of the particulate carbon black-containing feedstock, the feedstock can be subjected with nitrogen (or nitrogen gas), such as heated nitrogen (or heated nitrogen gas), wherein the nitrogen (or nitrogen gas) preferably comprises at least 30 vol.-% nitrogen, such as at least 40 vol.-% nitrogen, at least 50 vol.-% nitrogen, at least 60 vol.-% nitrogen, at least 70 vol.-% nitrogen, or at least 80 vol.-% nitrogen, based on the total volume of the nitrogen (or nitrogen gas).

The atmosphere during the pyrolysis for the particulate carbon black-containing feedstock can comprise hydrogen, preferably at least 10 vol.-% hydrogen, such as at least 20 vol.-% hydrogen, at least 25 vol.-% hydrogen, at least 30 vol.-% hydrogen, at least 40 vol.-% hydrogen, at least 50 vol.-% hydrogen, or at least 60 vol.-% hydrogen, based on the total volume of the atmosphere during the pyrolysis. During the pyrolysis of the particulate carbon black-containing feedstock, the feedstock can be subjected with hydrogen (or hydrogen gas), such as heated hydrogen (or heated hydrogen gas), wherein the hydrogen (or hydrogen gas) preferably comprises at least 30 vol.-% hydrogen, such as at least 40 vol.-% hydrogen, at least 50 vol.-% hydrogen, at least 60 vol.-% hydrogen, at least 70 vol.-% hydrogen, or at least 80 vol.-% hydrogen, based on the total volume of the hydrogen (or hydrogen gas).

Thus, the pyrolysis can be carried out by subjecting the particulate carbon black-containing feedstock with heated nitrogen to provide the desired temperature.

The atmosphere during the pyrolysis for the particulate carbon black-containing feedstock can comprise less than 20 mol.-% $H_2O$, such as less than 15 mol.-% $H_2O$, less than 10 mol.-% $H_2O$, less than 5 mol.-% $H_2O$, less than 3 mol.-% $H_2O$, less than 2 mol.-% $H_2O$, or less than 1 mol.-% $H_2O$, based on the total volume of the atmosphere during the pyrolysis. In other words, it is possible that water is present during the pyrolysis but it is intended that the water content is as low as possible. For instance, in a continuous process, water for the gasification or $CO_2$ for the gasification is removed from the atmosphere so that no water or no $CO_2$ is present during the pyrolysis. However, it is possible that residues of the water or $CO_2$ are still present.

The atmosphere during the pyrolysis for the particulate carbon black-containing feedstock can comprise less than less than 5 mol.-% $O_2$, such as less than 4 mol.-% $O_2$, less than 2 mol.-% $O_2$, less than 1 mol.-% $O_2$, less than 0.5 mol.-% $O_2$, less than 0.2 mol.-% $O_2$, or less than 0.1 mol.-% $O_2$, based on the total volume of the atmosphere during the pyrolysis.

The particulate carbon black-containing feedstock comprises (or is) rubber granulate, plastic granulate, and/or biomass-based granulate, preferably the particulate carbon black-containing feedstock comprises rubber granulate comprising carbon black.

The particulate carbon black-containing feedstock can be derived from a tire, preferably a pneumatic tire, a tire tread, a tire belt, a tire belt reinforcement, a tire carcass, a tire carcass reinforcement, a tire sidewall, tire inner liner, tire apex, tire shoulder, tire hump strip, tire chafer, a tire bead filler. The particulate carbon black-containing feedstock can be derived from a cable sheath, a tube, a drive belt, a conveyor belt, a roll covering, a shoe sole, a hose, a sealing member, a profile, a damping element, a coating or a colored or printed article.

It is possible that the rubber granulate or the particulate carbon black-containing feedstock is subjected to a size reducing step in order to obtain the desired particle size. For instance, the rubber granulate or the particulate carbon black-containing feedstock can be milled for instance using ultrasonic milling and electrical arc milling. Said milled rubber granulate or the particulate carbon black-containing feedstock can then be used as the particulate carbon black-containing feedstock for the pyrolysis (a).

The volume average particle size x50 of the particulate carbon black-containing feedstock can be from 1 to 800 $\mu$m, preferably 10 to 150 $\mu$m, more preferably 30 to 100 $\mu$m, and most preferably 35 to 60 $\mu$m, wherein the volume average particle size is preferably measured as described in the specification by dry measurement using laser diffraction.

The volume average particle size x90 of the particulate carbon black-containing feedstock can be from 1 to 800 $\mu$m, preferably 10 to 150 $\mu$m, more preferably 30 to 100 $\mu$m, and most preferably 35 to 60 $\mu$m, wherein the volume average particle size is preferably measured as described in the specification by dry measurement using laser diffraction.

The volume average particle size x95 of the particulate carbon black-containing feedstock can be from 300 nm to 800 $\mu$m, preferably 500 nm to 150 $\mu$m, more preferably 800 nm to 100 $\mu$m, and most preferably 1 to 20 $\mu$m, wherein the volume average particle size is preferably measured as described in the specification by dry measurement using laser diffraction.

The volume average particle size x99 of the particulate carbon black-containing feedstock can be from 300 nm to 800 $\mu$m, preferably 500 nm to 150 $\mu$m, more preferably 800 nm to 100 $\mu$m, and most preferably 1 to 20 $\mu$m, wherein the volume average particle size is preferably measured as described in the specification by dry measurement using laser diffraction.

The particle size of the particulate carbon black-containing feedstock can be from 1 to 800 $\mu$m, preferably 10 to 150 $\mu$m, more preferably 30 to 100 $\mu$m, and most preferably 35 to 60 $\mu$m, wherein the particle size is preferably measured as described in the specification by dry measurement using laser diffraction.

The particle size of the particulate carbon black-containing feedstock can be less than 800 $\mu$m preferably less than 500 $\mu$m, more preferably less than 300 $\mu$m, and most preferably less than 200 $\mu$m, wherein the particle size is preferably measured as described in the specification by dry measurement using laser diffraction.

The expression "x50" or "x(number)" means a percentile of an average distribution (alternatively the expression "D50" or "D(number) can be used). Accordingly, x50 = 100 $\mu$m means that 50% of the sample is smaller than the indicated value 100 $\mu$m.

The particle size distribution can be determined by dry measurement with the measurement system from Sympatec GmbH (Germany) consisting of VIBRI: conveyor unit (by vibration); RODOS: compressed air dispersion; and HELOS BR: measuring unit, laser diffraction. As sample preparation, 0.5 g of the dried material is filled into the funnel. During the measurement, the sample is fed with the VIBRI unit to the compressed air dispersion unit RODOS by vibration. Measurement is accomplished in HELOS BR unit using laser diffraction. OPTICAL concentration ($c_{opt}$) was automatically filtered between 5-15% during the measurement. Three separate measurements of 10 sec using each 0.5 g of the material are recorded. Before each measurement, a background measurement of 15 sec is recorded to minimize noise. The obscuration range is controlled by the feeding rate with automatic adjustment and the hopper gap in the range of 5-15% using an integral factor of 0.2. The dispersing air pressure is set to 3 bar. Reported values (volume distribution) represent the average of three measurements after the data analysis using a standard analysis model in the instrument software.

It is desired that at least 70 wt.-%, preferably at least 80 wt.-%, more preferably at least 90 wt.-%, most preferably at least 98 wt.-%, of the particulate carbon-containing feedstock has a particle size of more than 2 mm, wherein the particle size is measured according to ASTM D 1511-12 (2017).

It is desired that at least 50 wt.-%, preferably at least 60 wt.-%, more preferably at least 70 wt.-%, most preferably at least 80 wt.-%, of the particulate carbon-containing feedstock has a particle size of more than 2.8 mm, wherein the particle size is measured according to ASTM D 1511-12 (2017) using an additional U.S. Standard Sieves or equivalent, conforming to Specification ASTM E11, Sieve Nos. 7, having openings of 2800 $\mu$m. The sieves shall be 25 mm in height and 200 mm in diameter.

It is desired that at least 50 wt.-%, preferably at least 60 wt.-%, more preferably at least 70 wt.-%, most preferably at least 80 wt.-%, of the particulate carbon-containing feedstock has a particle size of more than 2 to 2.8 mm, wherein the particle size is measured according to ASTM D 1511-12 (2017) using an additional U.S. Standard Sieves or equivalent, conforming to Specification ASTM E11, Sieve Nos. 7, having openings of 2800 $\mu$m. The sieves shall be 25 mm in height and 200 mm in diameter.

In the ASTM D 1511-12 (2017) norm, several sieves are used for the determination of the particle sizes. For instance, the expression "more than 2 to 2.8 mm" means that the mass of the particles present on Sieve No. 10 is in the desired wt.-% range. In other words, Sieve No. 10 has openings of 2000 $\mu$m (i.e. 2 mm) so that particles having a particle size of 2000 $\mu$m or less are not present on the sieve. Since Sieve No. 7 retains all particles having a particle size of more than 2.8 mm, the weight percentage of the particle fraction having a particle size of more than 2 to 2.8 mm can be easily determined.

It is desired that at least 50 wt.-%, preferably at least 60 wt.-%, more preferably at least 70 wt.-%, most preferably at least 80 wt.-%, of the particulate carbon-containing feedstock has a particle size of more than 1 to 2 mm, wherein the particle size is measured according to ASTM D 1511-12 (2017).

The particle size distribution of the particulate carbon-containing feedstock can be measured according to ASTM D 1511-12 (2017) and (a) Sieve No. 10 retains 10 to 70 wt.-%, preferably 15 to 65 wt.-%, more preferably 25 to 60 wt.-%, and most preferably 30 to 55 wt.-% of the particulate carbon-containing feedstock, and/or (b) Sieve No. 18 retains 1 to 25 wt.-%, preferably 2 to 20 wt.-%, more preferably 4 to 15 wt.-%, and most preferably 5 to 12 wt.-% of the particulate carbon-containing feedstock, and/or (c) Sieve No. 35 retains 0 to 10 wt.-%, preferably 1 to 8 wt.-%, more preferably 2 to 7 wt.-%, and most preferably 3 to 8 wt.-% of the particulate carbon-containing feedstock, and/or (d) Sieve No. 60 retains 0 to 10 wt.-%, preferably 1 to 8 wt.-%, more preferably 2 to 7 wt.-%, and most preferably 3 to 7 wt.-% of the particulate carbon-containing feedstock, and/or (e) Sieve No. 120 retains 0 to 5 wt.-%, preferably 1 to 4 wt.-%, more preferably 1.5 to 3 wt.-%, and most preferably 2 to 2.5 wt.-% of the particulate carbon-containing feedstock, and/or (f) Bottom receive pan comprises less than 4 wt.-%, preferably less than 3 wt.-%, more preferably 0 to 2 wt.-%, and most preferably 0.01 to 1 wt.-% of the particulate carbon-containing feedstock. The particulate carbon black-containing feedstock can comprise ash (or has an ash content), wherein ash comprises metal, metal compounds, silicon, oxygen, sulphur and/or silica, preferably metal comprises zinc, silicon, calcium, cobalt, manganese, potassium, aluminium, and/or iron.

The particulate carbon black-containing feedstock can have an ash content in a range of from 0.5 to 25 wt.-%, preferably from 1 to 20 wt.-%, more preferably from 2 to 15 wt.-%, most preferably from 3 to 10 wt.-%, wherein the wt.-% is based on the total weight of the particulate carbon black-containing feedstock and wherein the ash content is determined according to ASTM D 1506-15 at 550 °C, 16 h.

The particulate carbon black-containing feedstock can comprise zinc, preferably zinc oxide. The zinc is generally derived from a tire based feedstock used for the vulcanization of the rubber article. The particulate carbon black-containing feedstock can have a zinc content in a range of from 2.0 to 6.0 mass %, preferably from 2.5 to 5.5 mass %, more preferably from 3.0 to 5.0 mass %, most preferably from 3.5 to 4.5 mass %, wherein the zinc content is based on the total mass of particulate carbon black-containing feedstock and wherein the zinc content is preferably determined according to Inductively Coupled Plasma Optical Emission Spectrometry (ICP-OES), more preferably the zinc content is determined as described in the specification.

The analysis of the Zn content can be conducted following method A in ASTM D8371-20 using an ICP-OES (Spectro Arcos III) from SPECTRO Analytical Instruments GmbH (Germany) and a microwave (turboWAVE inert) from MLS Mikrowellen-Labor-Systeme GmbH (Germany). For the sample preparation, 0.3-0.4 g of the material was weighed into a microwave tube with a capacity of 15 $cm^3$ and wetted with 1 ml of pure water (<0.055 $\mu$S/cm). Afterwards, 10 $cm^3$ of concentrated nitric acid ($\geq$65 %) was added to the tube and treated in the microwave. The sample was then measured with ICP-OES.

The particulate carbon black-containing feedstock can have a silicon (Si) content in a range of from 1.0 to 5.0 wt.-%, preferably from 1.8 to 4.5 wt.-%, more preferably from 2.0 to 4.0 wt.-%, most preferably from 2.2 to 4.0 wt.-%, wherein the wt.-% is based on the total weight of the particulate carbon black-containing feedstock and wherein the silicon content is preferably determined by to Inductively Coupled Plasma Optical Emission Spectrometry (ICP-OES), more preferably the silicon content is determined as described in the specification.

The analysis of the Si content was conducted using an ICP-OES (iCAP 6300) from Thermo Fisher (USA) and a microwave (turboWAVE inert) from MLS Mikrowellen-Labor-Systeme GmbH (Germany). For the analysis of the Si content method A in ASTM D8371-20 was followed. However, a combination of concentrated nitric acid ($\geq$65 %) and concentrated hydrofluoric acid (~ 49%) (usually in a volume ratio of 1:1) with microwave treatment was used to completely digest the sample with microwave treatment. The digested sample is diluted with distilled water to a suitable concentration. The sample was measured with ICP-OES, whereby the device is equipped with a sample introduction kit suitable for HF. In ICP-OES, silicon can be measured with two wavelengths of 288.158 nm and 251.611 nm, preferably measured at 288.158 nm. A standard, such as a commercial standard solution (1,000 g/L Si in nitric acid (1 mol/L) with 2wt.-% HF commercially available from Bernd kraft GmbH (Germany) is measured for calibration. For the measurement of a rubber containing material, the ash obtained according to ASTM D 1506-15 at 550 °C, 16 h is used for the analysis of the Si content.

The silica (or silicon in form of silica) is typically embedded in the carbon black of the particulate carbon black-containing feedstock, attached to the carbon black of the particulate carbon black-containing feedstock, attached on the surface of the carbon black of the particulate carbon black-containing feedstock, and/or associated in the carbon black of the particulate carbon black-containing feedstock. The silica (or silicon in form of silica) is typically embedded in the carbon of the particulate carbon black-containing feedstock, attached to the carbon of the particulate carbon black-containing feedstock, attached on the surface of the carbon of the particulate carbon black-containing feedstock, and/or associated in the carbon of the particulate carbon black-containing feedstock.

The particulate carbon black-containing feedstock can have a sulfur content in a range of from 1.0 to 4.0 wt.-%, preferably from 2.0 to 4.0 wt.-%, more preferably from 2.0 to 3.0 wt.-%, wherein the wt.-% is based on the total weight of the particulate carbon black-containing feedstock and wherein the sulfur content is determined by elemental analysis as described in the specification.

The particulate carbon black-containing feedstock generally comprises carbon black. The particulate carbon black-containing feedstock (i) can comprise at least 5 wt.-% carbon black, preferably at least 15 wt.-% carbon black, more preferably at least 20 wt.-% carbon black, even more preferably at least 25 wt.-% carbon black, and most preferably at least 30 wt.-% carbon black, based on the total weight of the particulate carbon black-containing feedstock, and/or (ii) can comprise 5 to 50 wt.-% carbon black, preferably 12 to 45 wt.-% carbon black, more preferably 15 to 40 wt.-% carbon black, more preferably 20 to 35 wt.-% carbon black, and most preferably 25 to 30 wt.-% carbon black, based on the total weight of the particulate carbon black-containing feedstock.

The gasification can be carried out by using $H_2O$ and/or $CO_2$. $H_2O$ is particularly preferred. For the gasification, $H_2O$ reacts with carbon of the particulate carbon black-containing feedstock to CO and $H_2$. Alternatively, $CO_2$ reacts with carbon of the particulate carbon black-containing feedstock to CO. It has been surprisingly found that the gasification can be used to selectively remove coke that is present in carbon black, particularly after the pyrolysis of particulate carbon black-containing feedstock.

Particularly, at low gasification temperatures, the selectivity of coke compared to carbon black is high. Accordingly, the gasification can be carried out at a temperature of 750 °C to 910 °C, preferably 760 °C to 900 °C, more preferably 770 to 890 °C, even more preferably 780 °C to 860 °C, and most preferably 790 to 850 °C.

The gasification can be carried out by subjecting the material (such as the material after the pyrolysis) with a gas comprising $H_2O$ and/or $CO_2$, preferably $H_2O$.

The gasification can be carried out by subjecting the material (such as the material after the pyrolysis) with a gas comprising 20 to 100 mol-% $H_2O$ and/or $CO_2$, preferably 30 to 100 mol-% $H_2O$ and/or $CO_2$, more preferably 40 to 90 mol-% $H_2O$ and/or $CO_2$, most preferably 50 to 80 mol-% $H_2O$ and/or $CO_2$, based on the total number of moles of the gas.

The gasification atmosphere in which the material (such as the material after the pyrolysis) is treated can comprise 20 to 100 mol-% $H_2O$ and/or $CO_2$, preferably 30 to 100 mol -% $H_2O$ and/or $CO_2$, more preferably 40 to 90 mol-% $H_2O$ and/or $CO_2$, most preferably 50 to 80 mol-% $H_2O$ and/or $CO_2$, based on the total number of moles of the gasification atmosphere in which the material (such as the material after the pyrolysis) is treated.

The gasification can be carried out by subjecting the material (such as the material after the pyrolysis) with steam comprising 20 to 100 mol-% $H_2O$, preferably 30 to 100 mol-% $H_2O$, more preferably 40 to 90 mol-% $H_2O$, most preferably 50 to 80 mol-% $H_2O$, based on the total number of moles of the steam.

The gasification can be carried out by subjecting the material (such as the material after the pyrolysis) with a gas comprising 20 to 100 mol-% $H_2O$, preferably 30 to 100 mol- % $H_2O$, more preferably 40 to 90 mol-% $H_2O$, most preferably 50 to 80 mol-% $H_2O$, based on the total number of moles of the gas. Most preferably, the gasification can be carried out by subjecting the carbon black-containing feedstock with steam.

The gasification can be carried out by subjecting the material (such as the material after the pyrolysis) with a gas comprising 0 to 60 mol-% $N_2$, preferably 0 to 30 mol-% $N_2$, more preferably 0 to 20 mol-% $N_2$, most preferably 0 to 10 mol-% $N_2$, based on the total number of moles of the steam. Most preferably, the gasification can be carried out by subjecting the carbon black-containing feedstock with a gas free of nitrogen.

The gasification can be carried out by subjecting the material (such as the material after the pyrolysis) with a gas comprising 20 to 100 mol-% $CO_2$, preferably 30 to 100 mol- % $CO_2$, more preferably 40 to 90 mol-% $CO_2$, most preferably 50 to 80 mol-% $CO_2$, based on the total number of moles of the steam.

The gasification atmosphere in which the material (such as the material after the pyrolysis) is treated can comprise 20 to 100 mol-% $H_2O$ and/or $CO_2$, preferably 30 to 100 mol -% $H_2O$ and/or $CO_2$, more preferably 40 to 90 mol-% $H_2O$ and/or $CO_2$, most preferably 50 to 80 mol-% $H_2O$ and/or $CO_2$, based on the total number of moles of the gasification atmosphere in which the material (such as the material after the pyrolysis) is treated.

The gasification atmosphere in which the material (such as the material after the pyrolysis) is treated can comprise 20 to 100 mol-% $H_2O$, preferably 30 to 100 mol -% $H_2O$, more preferably 40 to 90 mol-% $H_2O$, most preferably 50 to 80 mol-% $H_2O$, based on the total number of moles of the gasification atmosphere in which the carbon black-containing feedstock is treated.

The gasification atmosphere in the carbon black-containing feedstock is treated can comprise 20 to 100 mol-% $CO_2$, preferably 30 to 100 mol -% $CO_2$, more preferably 40 to 90 mol-% $CO_2$, most preferably 50 to 80 mol-% $CO_2$, based on the total number of moles of the gasification atmosphere in which the carbon black-containing feedstock is treated.

The gasification can be carried out by subjecting the material (such as the material after the pyrolysis) with a gas comprising up to 20 mol-% $H_2$, preferably up to 10 mol-% $H_2$, more preferably up to 5 mol-% $H_2$, and most preferably up to 1 mol-% $H_2$, based on the total number of moles of the gas. Preferably no $H_2$ is present in the gas that is subjecting the carbon black-containing feedstock.

The gasification atmosphere in that the material (such as the material after the pyrolysis) is treated can comprise up to 20 mol-% $H_2$, preferably up to 10 mol-% $H_2$, more preferably up to 5 mol-% $H_2$, and most preferably up to 1 mol-% $H_2$, based on the total number of moles of the gasification atmosphere in which the carbon black-containing feedstock is treated.

The gasification atmosphere in that the material (such as the material after the pyrolysis) is treated can comprise 1 to 30 mol-% $H_2$, preferably 3 to 25 mol-% $H_2$, more preferably 4 to 20 mol-% $H_2$, and most preferably 6 to 15 mol-% $H_2$, based on the total number of moles of the gasification atmosphere in which the carbon black-containing feedstock is treated.

A high hydrogen containing atmosphere can be obtained by using a hydrogen burner.

It is particularly preferred that the material (such as the material after the pyrolysis) is subjected with steam for the gasification. The steam can be used to provide the required temperature for the gasification. Accordingly, a gas comprising or consisting of $H_2O$ can be preheated to a temperature of 200 °C to 950 °C, such as 730 °C to 950 °C, 730 °C to 910 °C, 730 °C to 900 °C, 740 to 890 °C, 740 °C to 860 °C, or 790 to 850 °C. Accordingly, the steam can be preheated to a temperature of 200 °C to 950 °C, such as 730 °C to 950 °C, 730 °C to 910 °C, 730 °C to 900 °C, 740 °C to 890 °C, 740 °C to 860 °C, or 790 to 850 °C. It is possible that the steam is preheated by a heat exchanger. The heat exchanger can exchange heat from another gas stream, such as the pyrolysis gas stream, the gasification gas stream and/or the buffer gas stream to the steam.

The material, such as the material after the pyrolysis, generally refers to the pyrolyzed carbon black-containing particulate.

The pyrolyzed carbon black-containing particulate can be heated to the required temperature for the gasification (b) by using a burner, preferably the fuel for the burner is hydrogen or natural gas, preferably hydrogen. Thus the burner for the gasification (b) can be a hydrogen burner. Hydrogen for the burner has several advantages. First, the pyrolysis gas typically comprises hydrogen so that the pyrolysis gas can be used directly as the fuel or the hydrogen can be separated from the pyrolysis gas and said hydrogen is used as fuel. In addition, a hydrogen burner can be used to generate the steam required for the gasification process.

Moreover, the required $H_2O$ for the gasification as well as the required heat can be provided by at least one hydrogen burner.

The particulate carbon black-containing feedstock can be milled before the gasification step, and/or wherein the obtained treated carbon black is milled after the gasification step. For instance, using ultrasonic milling and/or electrical arc milling and/or jet milling.

The gasification can be carried out for 1 min to 10 h, preferably 10 min to 5 h, more preferably 20 min to 3 h, even more preferably 30 min to 2 h, and most preferably 40 min to 1.5 h.

The method can be carried out in a multiple hearth furnace and the pyrolysis is carried out on a hearth above a hearth for the gasification, wherein $H_2O$ (or steam) used for the gasification is removed from the multiple hearth furnace before entering a hearth for the pyrolysis, thereby utilizing the layered design of the reactor.

After the gasification of the material (i.e. the pyrolyzed carbon black-containing particulate), a treated carbon black is obtained. Since the gasification selectively reduces the coke content (de-coking) in a carbon black comprising coke (e.g. recovered carbon black, or pyrolyzed carbon black), the obtained treated carbon black comprises a lower coke content compared to the pyrolyzed carbon black-containing particulate (e.g. recovered carbon black, or pyrolyzed carbon black). Thus, a treated carbon black is obtained comprising a lower coke content compared to the pyrolyzed carbon black-containing particulate. A low coke content is particularly preferred since carbon black comprising a low coke content performs better as a filler in rubber articles, such as tires. For instance, the tensile strength, the tear resistance and/or the max loss factor tan(d) is improved.

The treated carbon black can have a coke content below 15 wt.-%, preferably below 10 wt.-%, more preferably below 5 wt.-%, and most preferably below 1 wt.-%, based on the total weight of treated carbon black.

The treated carbon black comprises less impurities compared to recovered carbon black. Even if multiple measurements exists for the measurements of carbon-containing impurities, the information on purity is different.

For instance, carbon blacks can in particular contain as impurities organic compounds that have a skeleton with a polycyclic aromatic structure, which are commonly referred to as polycyclic aromatic hydrocarbons (PAHs). PAHs are believed to be harmful to the health and environment as for example discussed in Sudip K. Samanta, Om V. Singh and Rakesh K. Jain: "Polycyclic aromatic hydrocarbons: environmental pollution and bioremediation", TRENDS in Biotechnology, Vol. 20, No. 6, Jun. 2002, pages 243-248. Therefore, the PAH content of carbon blacks is subject to increasingly demanding customer needs and official regulations for applications such as use in food or beverage contact situations, pharmaceuticals, cosmetics, or the manufacture of toys and articles for children. For instance, the American Food and Drug Administration (FDA) has limited the total PAH content of high purity furnace blacks in goods with food contact to 0.5 ppm (cf. U.S. Code of Federal Regulations (CFR) 21 Sec.178.3297), whereby the PAH content is defined as the sum of 22 PAH compounds (PAH22 content).

However, even if the PAH22 content is low, the measurement of the transmittance at 425 nm in toluene measured according to ASTM D 1618-18 against toluene can still reveal that a significant amount of impurities is still present (low transmittance). Moreover, a high transmittance at 425 nm, such as more than 90 %, does not mean that only a negligible amount of organic impurities is present on the respective carbon black. The transmittance at lower wavelengths, such as 300 nm or 355 nm, may reveal that the carbon black comprises a high amount of organic impurities. For instance, a commercial rCB A2 was measured to have a transmittance at 425 nm in toluene measured according to ASTM D 1618-18 against toluene of 99.7 % but a transmittance at 300 nm in toluene measured according to ASTM D 1618-18 against toluene of 9.5 %. In comparison, a treated carbon black according to the invention has a transmittance at 425 nm in toluene measured according to ASTM D 1618-18 against toluene of 99.9 % and a transmittance at 300 nm in toluene measured according to ASTM D 1618-18 against toluene of 94.5 %. It should be noted that in each case, the carbon black containing feedstock was heat treated and it was surprising that only after the gasification, the transmittance at 300 nm in toluene measured according to ASTM D 1618-18 against toluene was very high.

Accordingly, the treated carbon black can have a transmittance of at least 80 %, preferably at least 85 %, more preferably at least 90 %, even more preferably at least 95 %, most preferably at least 98 % wherein the transmittance at 425 nm in toluene is measured according to ASTM D 1618-18 against toluene. The treated carbon black can have a transmittance of at least 80 %, preferably at least 85 %, more preferably at least 90 %, even more preferably at least 95 %, most preferably at least 98 % wherein the transmittance at 355 nm in toluene is measured according to ASTM D 1618-18 against toluene, wherein the transmittance is measured at 355 nm instead of 425 nm. The treated carbon black can have a transmittance of at least 80 %, preferably at least 85 %, more preferably at least 90 %, even more preferably at least 95 %, most preferably at least 98 % wherein the transmittance at 300 nm in toluene is measured according to ASTM D 1618-18 against toluene, wherein the transmittance is measured at 300 nm instead of 425 nm.

It is preferred that the treated carbon black has a transmittance of at least 80 %, preferably at least 85 %, more preferably at least 90 %, even more preferably at least 95 %, most preferably at least 98 % wherein the transmittance at 425 nm in toluene is measured according to ASTM D 1618-18 against toluene, and a transmittance of at least 80 %, preferably at least 85 %, more preferably at least 90 %, even more preferably at least 95 %, most preferably at least 98 % wherein the transmittance at 355 nm in toluene is measured according to ASTM D 1618-18 against toluene, wherein the transmittance is measured at 355 nm instead of 425 nm, and a transmittance of at least 80 %, preferably at least 85 %, more preferably at least 90 %, even more preferably at least 95 %, most preferably at least 98 % wherein the transmittance at 300 nm in toluene is measured according to ASTM D 1618-18 against toluene, wherein the transmittance is measured at 300 nm instead of 425 nm.

The MOAH and MOSH/POSH values indicate the organic impurities of the carbon black. Again, the mere pyrolysis to obtain rCB (heat treatment) does not sufficiently reduce the organic impurities measured according to MOAH and MOSH/POSH.

The treated carbon black can have a MOAH value of below 500 mg/kg, preferably below 300 mg/kg, more preferably below 250 mg/kg, and most preferably below 200 mg/kg, determined as described in the specification.

The treated carbon black can have a MOSH/POSH value of below 900 mg/kg, preferably below 500 mg/kg, more preferably below 300 mg/kg, even more preferably below 150 mg/kg and most preferably below 100 mg/kg, determined as described in the specification.

The treated carbon black can have an iodine adsorption number of 30 to 80 mg/g, preferably 40 to 70 mg/g, more preferably 45 to 65 mg/g, the iodine adsorption number is measured according to ASTM D1510-17.

The treated carbon black can have a statistical thickness surface area (STSA) determined according to ASTM D6556-17 in a range from 15 to 500 $m^2$/g, preferably from 20 to 400 $m^2$/g, more preferably from 30 to 300 $m^2$/g, even more preferably from 40 to 200 $m^2$/g, most preferably from 50 to 150 $m^2$/g. Preferably, the statistical thickness surface area (STSA) determined according to ASTM D6556-17 of the treated carbon black is higher than the statistical thickness surface area (STSA) determined according to ASTM D6556-17 of the particulate carbon black-containing feedstock.

The treated carbon black can have a BET surface area determined according to ASTM D6556-17 in a range from 15 to 500 $m^2$/g, preferably from 30 to 300 $m^2$/g, more preferably from 40 to 250 $m^2$/g, even more preferably from 50 to 200 $m^2$/g, most preferably from 60 to 150 $m^2$/g. Preferably, BET surface area determined according to ASTM D6556-17 of the treated carbon black is higher than the BET surface area determined according to ASTM D6556-17 of the particulate carbon black-containing feedstock.

The treated carbon black can have a compressed oil absorption number (COAN) measured according to ASTM D3493-16 in a range from 30 to 200 mL/100 g, preferably from 40 to 150 mL/100 g, more preferably from 50 to 120 mL/100 g, even more preferably from 55 to 110 mL/100 g, most preferably from 60 to 90 mL/100 g.

The obtained treated carbon black after the gasification can have (a) a BET surface area determined according to ASTM D6556-17 in a range from 40 to 100 $m^2$/g, preferably from 50 to 80 $m^2$/g, more preferably 55 to 70 $m^2$/g, and a compressed oil absorption number (COAN) measured according to ASTM D3493-16 in a range from 30 to 200 mL/100 g, preferably from 40 to 150 mL/100 g, more preferably from 50 to 120 mL/100 g, even more preferably from 55 to 110 mL/100 g, most preferably from 60 to 90 mL/100 g, (b) a BET surface area determined according to ASTM D6556-17 in a range from 10 to 100 $m^2$/g, preferably from 20 to 90 $m^2$/g, more preferably 25 to 80 $m^2$/g, and a compressed oil absorption number (COAN) measured according to ASTM D3493-16 in a range from 30 to 200 mL/100 g, preferably from 40 to 150 mL/100 g, more preferably from 50 to 120 mL/100 g, even more preferably from 55 to 110 mL/100 g, most preferably from 60 to 90 mL/100 g, and/or (c) a BET surface area determined according to ASTM D6556-17 in a range from 200 to 600 $m^2$/g, preferably from 250 to 500 $m^2$/g, more preferably 300 to 450 $m^2$/g, and a compressed oil absorption number (COAN) measured according to ASTM D3493-16 in a range from 30 to 200 mL/100 g, preferably from 40 to 150 mL/100 g, more preferably from 50 to 120 mL/100 g, even more preferably from 55 to 110 mL/100 g, most preferably from 60 to 90 mL/100 g.

The treated carbon black can have a volatile content measured at 950°C of 0.01 to 10 wt.-%, such as 0.3 to 10 wt.-%, 0.5 to 10 wt.-%, 0.7 to 5 wt.-%, 0.8 to 4 wt.-%, 0.9 to 3 wt.-%, 1 to 2.5 wt.-%, 1.1 to 2.3 wt.-%, 1.2 to 2.2 wt.-%, 1.3 to 2.1 wt.-%, 1.4 to 2 wt.-%, 1.5 to 1.9 wt.-%, or 1.6 to 1.8 wt.-%. The volatile content can be measured as described in the specification.

The volume average particle size x50 of the obtained treated carbon black, preferably before milling, can be from 1 to 800 $\mu$m preferably 10 to 150 $\mu$m, more preferably 30 to 100 $\mu$m, and most preferably 35 to 60 $\mu$m, wherein the volume average particle size is preferably measured as described in the specification by dry measurement using laser diffraction.

The volume average particle size x90 of the obtained treated carbon black, preferably before milling, can be from 1 to 800 $\mu$m, preferably 10 to 150 $\mu$m, more preferably 30 to 100 $\mu$m, and most preferably 35 to 60 $\mu$m, wherein the volume average particle size is preferably measured as described in the specification by dry measurement using laser diffraction.

The volume average particle size x95 of the obtained treated carbon black, preferably before milling, can be from 300 nm to 800 $\mu$m, preferably 500 nm to 150 $\mu$m, more preferably 800 nm to 100 $\mu$m, and most preferably 1 to 20 $\mu$m, wherein the volume average particle size is preferably measured as described in the specification by dry measurement using laser diffraction.

The volume average particle size x99 of the obtained treated carbon black, preferably before milling, can be from 300 nm to 800 $\mu$m, preferably 500 nm to 150 $\mu$m, more preferably 800 nm to 100 $\mu$m, and most preferably 1 to 20 $\mu$m, wherein the volume average particle size is preferably measured as described in the specification by dry measurement using laser diffraction.

The particle size of the obtained treated carbon black, preferably before milling, can be from 1 to 800 μm, preferably 10 to 150 μm, more preferably 30 to 100 μm, and most preferably 35 to 60 μm, wherein the particle size is preferably measured as described in the specification by dry measurement using laser diffraction.

The particle size of the obtained treated carbon black stock, preferably before milling, can be less than 800 μm, preferably less than 500 μm, more preferably less than 300 μm, and most preferably less than 200 μm, wherein the particle size is preferably measured as described in the specification by dry measurement using laser diffraction.

It is desired that at least 70 wt.-%, preferably at least 80 wt.-%, more preferably at least 90 wt.-%, most preferably at least 98 wt.-%, of the obtained treated carbon black, preferably before milling, has a particle size of more than 2 mm, wherein the particle size is measured according to ASTM D 1511-12 (2017).

It is desired that at least 50 wt.-%, preferably at least 60 wt.-%, more preferably at least 70 wt.-%, most preferably at least 80 wt.-%, of the obtained treated carbon black, preferably before milling, has a particle size of more than 2.8 mm, wherein the particle size is measured according to ASTM D 1511-12 (2017) using an additional U.S. Standard Sieves or equivalent, conforming to Specification ASTM E11, Sieve Nos. 7, having openings of 2800 μm. The sieves shall be 25 mm in height and 200 mm in diameter.

It is desired that at least 50 wt.-%, preferably at least 60 wt.-%, more preferably at least 70 wt.-%, most preferably at least 80 wt.-%, of the obtained treated carbon black, preferably before milling, has a particle size of more than 2 to 2.8 mm, wherein the particle size is measured according to ASTM D 1511-12 (2017) using an additional U.S. Standard Sieves or equivalent, conforming to Specification ASTM E11, Sieve Nos. 7, having openings of 2800 μm. The sieves shall be 25 mm in height and 200 mm in diameter.

It is desired that at least 50 wt.-%, preferably at least 60 wt.-%, more preferably at least 70 wt.-%, most preferably at least 80 wt.-%, of the obtained treated carbon black, preferably before milling, has a particle size of more than 1 to 2 mm, wherein the particle size is measured according to ASTM D 1511-12 (2017).

The particle size distribution of the obtained treated carbon black, preferably before milling, can be measured according to ASTM D 1511-12 (2017) and (a) Sieve No. 10 retains 10 to 70 wt.-%, preferably 15 to 65 wt.-%, more preferably 25 to 60 wt.-%, and most preferably 30 to 55 wt.-% of the obtained treated carbon black, and/or (b) Sieve No. 18 retains 1 to 25 wt.-%, preferably 2 to 20 wt.-%, more preferably 4 to 15 wt.-%, and most preferably 5 to 12 wt.-% of the obtained treated carbon black, and/or (c) Sieve No. 35 retains 0 to 10 wt.-%, preferably 1 to 8 wt.-%, more preferably 2 to 7 wt.-%, and most preferably 3 to 8 wt.-% of the obtained treated carbon black, and/or (d) Sieve No. 60 retains 0 to 5 wt.-%, preferably 1 to 8 wt.-%, more preferably 2 to 7 wt.-%, and most preferably 3 to 7 wt.-% of the obtained treated carbon black, and/or (e) Sieve No. 120 retains 0 to 5 wt.-%, preferably 1 to 4 wt.-%, more preferably 1.5 to 3 wt.-%, and most preferably 2 to 2 wt.-% of the obtained treated carbon black, and/or (f) Bottom receive pan comprises less than 4 wt.-%, preferably less than 3 wt.-%, more preferably 0 to 2 wt.- %, and most preferably 0.01 to 1 wt.-% of the obtained treated carbon black.

It has surprisingly been found that the obtained treated carbon black after the gasification can be milled more easily compared to non-de-coked material.

The obtained treated carbon black can be milled. For instance, using mechanical (impact) milling, jet milling, ultrasonic milling and/or electrical arc milling. The desired particle sizes can be obtained after milling the obtained treated carbon black. Accordingly, the below mentioned particle sizes and particle size distributions of the treated carbon black can be obtained after the milling.

It is preferred that the volume average particle size of the carbon black-containing feedstock is higher than the volume average particle size of the obtained treated carbon black, wherein the volume average particle size is preferably measured as described in the specification by dry measurement using laser diffraction.

It is preferred that the volume average particle size of the particulate carbon black-containing feedstock is higher than the volume average particle size of the obtained treated carbon black, wherein the volume average particle size is preferably measured as described in the specification by dry measurement using laser diffraction.

The volume average particle size x50 of the obtained treated carbon black can be from 0.3 to 50 μm preferably 0.5 to 50 μm, more preferably 0.8 to 20 μm, and most preferably 1 to 10 μm, wherein the volume average particle size is preferably measured as described in the specification by dry measurement using laser diffraction.

The volume average particle size x90 of the obtained treated carbon black can be from 0.3 to 50 μm preferably 0.5 to 50 μm, more preferably 0.8 to 20 μm, and most preferably 1 to 10 μm, wherein the volume average particle size is preferably measured as described in the specification by dry measurement using laser diffraction.

The volume average particle size x95 of the obtained treated carbon black can be from 0.3 to 50 μm, preferably 0.5 to 50 μm, more preferably 0.8 to 20 μm, and most preferably 1 to 10 μm, wherein the volume average particle size is preferably measured as described in the specification by dry measurement using laser diffraction.

The volume average particle size x99 of the obtained treated carbon black can be from 0.3 to 50 μm, preferably 0.5 to 50 μm, more preferably 0.8 to 20 μm, and most preferably 1 to 10 μm, wherein the volume average particle size is preferably measured as described in the specification by dry measurement using laser diffraction.

The particle size of the obtained treated carbon black can be from 0.3 to 50 μm preferably 0.5 to 50 μm, more

preferably 0.8 to 20 μm, and most preferably 1 to 10 μm, wherein the particle size is preferably measured as described in the specification by dry measurement using laser diffraction.

The particle size of the obtained treated carbon black can be less than 200 μm, preferably less than 150 μm, more preferably less than 100 μm, and most preferably less than 50 μm, wherein the particle size is preferably measured as described in the specification by dry measurement using laser diffraction.

The treated carbon black can comprise ash, wherein ash comprise metal, metal compounds, silicon, oxygen, sulphur and/or silica, preferably metal comprises zinc, silicon, calcium, cobalt, manganese, potassium, aluminum, and/or iron.

The treated carbon black can have an ash content in a range of from 3 to 50 wt.-%, preferably from 10 to 40 wt.-%, more preferably from 10 to 30 wt.-%, most preferably from 15 to 25 wt.-%, wherein the wt.-% is based on the total weight of the treated carbon black and wherein the ash content is determined according to ASTM D 1506-15 at 550 °C, 16 h. It is desired that the ash content determined according to ASTM D 1506-15 at 550 °C, 16 h, of the treated carbon black is higher compared to the ash content determined according to ASTM D 1506-15 at 550 °C, 16 h, of the particulate carbon black-containing feedstock. It is believed that the particulate carbon black-containing feedstock is de-coked during the gasification so that the overall carbon content is lower in the treated carbon black so that the relative ash content based on the total weight of the treated carbon black is higher.

The treated carbon black can be used to provide a rubber article. Examples of rubber articles include, but are not limited to, tires, conveyer belts, gaskets, such as door gaskets, drive belts, floor mats, shoe soles, belts, cable sheaths, hoses, and the like. Thus, a rubber article comprising the treated carbon black is provided. It is preferred that the rubber article is a tire.

A rubber composition is further provided for producing a tire, preferably a pneumatic tire, a tire tread, a belt, a belt reinforcement, a carcass, a carcass reinforcement, a sidewall, inner liner, apex, shoulder, hump strip, chafer, a bead filler, a cable sheath, a tube, a drive belt, a conveyor belt, a roll covering, a shoe sole, a hose, a sealing member, a profile, a damping element, a coating or a colored or printed article.

The tire may comprise a tire tread, a belt, a belt reinforcement, a carcass, a carcass reinforcement, a sidewall, inner liner, apex, shoulder, hump strip, chafer and a bead filler, wherein at least one of the foregoing is made of or comprises a rubber composition according to the invention. Such tires include for example, without being limited thereto, truck tires, passenger tires, off-road tires, aircraft tires, agricultural tires, and earth-mover tires.

Preferably, the tire has a circumferential tread of a cap/base configuration comprising a comprising a circumferential outer tread cap rubber layer which contains a running surface for the tire and a tread base rubber layer at least partially underlaying said tread cap rubber layer, wherein at least one of said tread cap rubber layer and said tread base rubber layer is made of or comprises a rubber composition according to the present invention.

The present invention further relates to an article made of or comprising the rubber composition being a cable sheath, a tube, a drive belt, a conveyor belt, a roll covering, a shoe sole, a hose, a sealing member, a profile, a damping element, a coating or a colored or printed article.

The invention further relates to a plastic composition. The plastic composition comprises at least one plastic material and at least one carbon black of the present invention.

The at least one plastic material may comprise a thermoplastic polymer, a thermosetting polymer, a thermoplastic elastomer, preferably low and high density polyethylene and polypropylene, polyvinyl chloride, melamine-formaldehyde resin, phenolic resin, epoxy resin, polyamide, polyester, polyoxymethylene, polymethyl methacrylate, polycarbonate, polystyrene, polyurethane, polyphenylene oxide, polysiloxane, polyacryloamide, polyaryletherketone, polysulfone, polyetherimide, acrylonitrile styrene acrylate or acrylonitrile butadiene styrene polymer and mixtures or co-polymers of any of the foregoing.

The invention will now be described with reference to the accompanying figures (FIGs) which do not limit the scope and ambit of the invention. The description provided is purely by way of example and illustration. However, specific features exemplified in the figures can be used to further restrict the scope of the invention and claims.

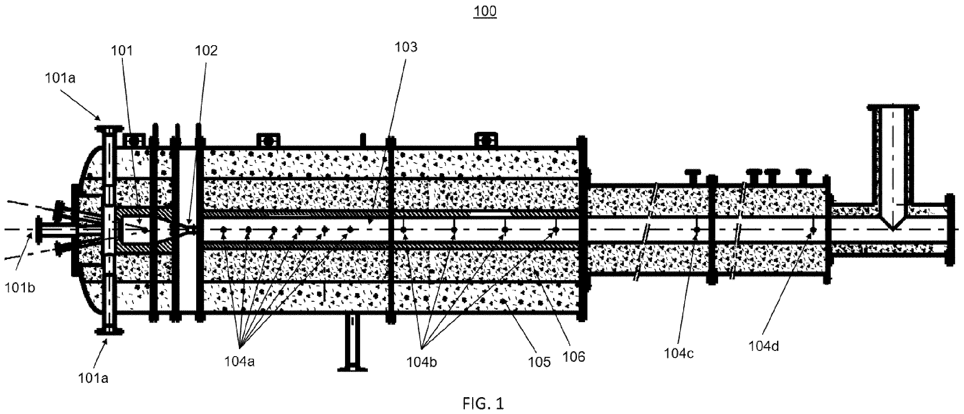

In FIG. 1 a furnace reactor (100) is shown that comprises a combustion chamber (101), a choke (102) and a tunnel (103). The reactor has an inner lining (106) as well as an outer lining (105). The combustion chamber (101) comprises means to inject a fuel (101b) and oxygen-containing gas (101a). In the figure, the oxygen-containing gas is injected into the combustion chamber (101) tangential or radial via oxygen containing gas means (101a) and the fuel is injected into the combustion chamber (101) axial via fuel injection means (101b). It is preferred that the oxygen-containing gas is preheated to a temperature described in the description. It is possible to adjust the temperature of the hot gas flow with the preheating of the oxygen-containing gas. Alternatively, the fuel can be preheated. In the combustion chamber (101) the fuel is combusted in the presence of the oxygen-containing gas. After the combustion, the temperature of the hot carrier gas is above 800 °C to bring the particulate carbon black-containing feedstock to the required temperature for the pyrolysis. The particulate carbon containing feedstock can be injected directly in the combustion chamber (101), in the choke (102) or in the tunnel (103). The particulate carbon containing feedstock can also be injected in any of the aforementioned combinations such as in the choke (102) as well as in the tunnel (103). The furnace reactor (100) comprises multiple positions for the quench (104a, 104b, 104c, 104d). The quench medium that is usually water reduces the temperature of the hot gas flow (or the product mixture) so that the reaction for forming the carbon black is terminated. Accordingly, the position of the quench has an influence of the residence time of the feedstock as well as the components derived from the feedstock. This means that residence time is increased if the quench position is adjusted further downstream the reactor. For instance, a quench at a position (104a) near the choke (102) results in a low residence time and a quench at a position (104c) downstream the reactor results in a high residence time. The reaction volume is the volume of the reactor between the injection of the feedstock and the position of the quench. If the feedstock is injected in the tunnel (103) and the distance between the position of the quench and the injection of the feedstock is 4200 mm, and the diameter of the tunnel is 200m, the resulting reaction volume is 132 L. The feeding rate of the particulate carbon containing feedstock should be adjusted depending on the reaction volume as mentioned in the description. For the present invention, a quench position at the back part of the tunnel is particularly preferred so that the particulate carbon containing feedstock has sufficient time for the evaporation or pyrolysis.

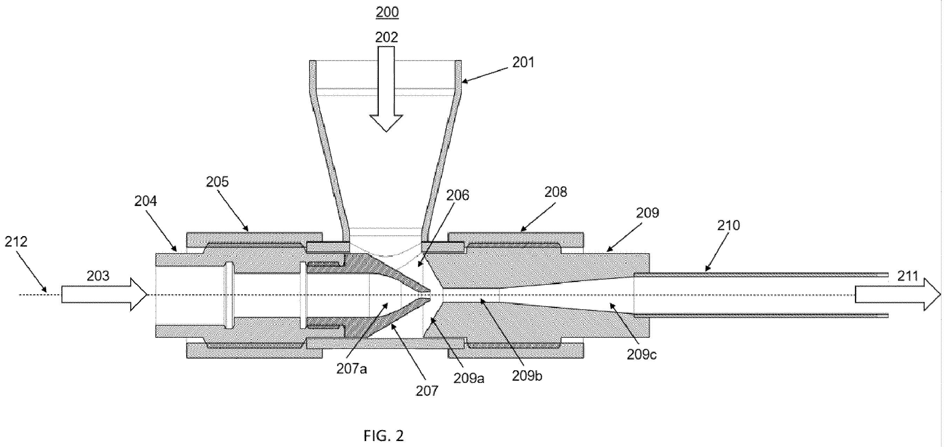

Referring to FIG. 2, a feeding and mixing device (200) is shown that comprises a carrier gas inlet (204), a particle inlet (201), means for accelerating and injecting a stream of carrier gas (207), a deagglomeration conduit (209), a mixing chamber (206) and an outlet for said carrier gas entraining particles (210). The carrier gas passage (212) is also indicated in FIG. 2. The carrier gas passage (212) extends along a longitudinal axis through said feeding and mixing device. The carrier gas (203) enters the feeding and mixing device (200) through the carrier gas inlet (204) and is accelerated in the means for accelerating and injecting a stream of carrier gas (207). In FIG. 2, the means for accelerating and injecting a stream of carrier gas (207) is configured as a Laval-nozzle. The Laval-nozzle comprises a convergent area (207a) in the flow direction. The resulting carrier gas jet is injected into the mixing chamber (206). The particles such as the particulate carbon black-containing feedstock (202) are perpendicularly injected into the mixing chamber (206). Accordingly, the particles will be entrained in the accelerated carrier gas. The abrupt acceleration of the particles results in a deagglomeration of the particles. The accelerated carrier gas comprising the particles are further injected into the deagglomeration conduit (209). In the deagglomeration conduit (209) the particles collide with each other or the inner wall or inner surface of the deagglomeration conduit (209) thereby a further deagglomeration is achieved. It is desired that the means for accelerating and injecting a stream of carrier gas (207) is configured in such a way that the carrier gas jet is directly injected into the deagglomeration conduit (209). Accordingly, a loss of the velocity can be minimized. The deagglomeration conduit (209) normally comprises from downstream to upstream (in the flow direction) an inlet funnel (209a), a conduit having a constant inner diameter (209b) and a diffuser nozzle diverging in said flow direction (209c). The inlet funnel (209a) further allows an optimal flow behavior into the conduit having a constant inner diameter (209b). The diffuser nozzle diverging in said flow direction (209c) is also beneficial for the flow behavior. The outlet (406) can be connected to the means for injecting the feedstock into a reactor according to FIG.1. It is preferred that one feeding and mixing device (200) supplies the deagglomerated feedstock to multiple means for injecting the feedstock into the reactor. It is further desired that the feeding and mixing device (200) comprises a screw conveyor that is connected with the particle inlet (201). The screw conveyor can provide a suitable amount or weight of particles into the mixing chamber (206). Furthermore, the feeding and mixing device (200) can be operated under pressure such as 1.5 bar or 2 bar. A pressure tank for the particles (e.g. particulate carbon containing feedstock) can be installed. Such a pressure tank is in fluid connection with the particle inlet (201) and is preferably connected with the feeding and mixing device (200) via a valve. Preferably two pressure tanks are present, wherein a first pressure tank connected to a second pressure tank. Both pressure tanks can be connected via a valve.

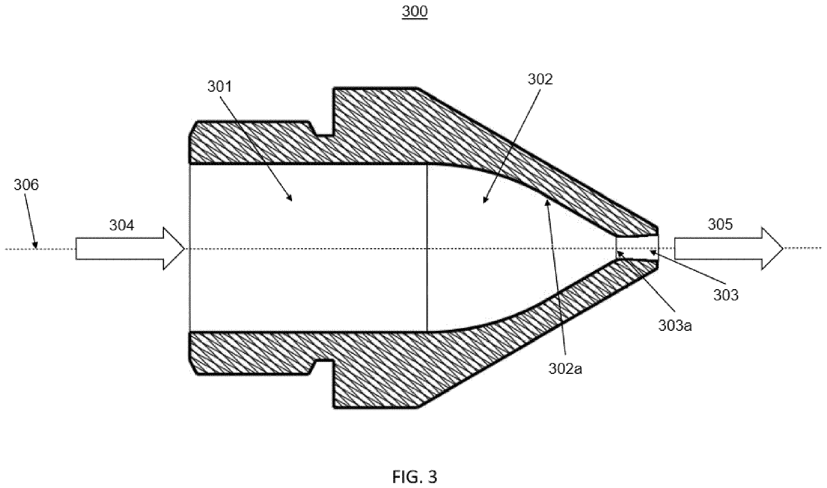

In FIG. 3, a Laval-nozzle (300) for use in feeding and mixing device (200) is shown. The carrier gas passage (306) extends along a longitudinal axis through said Laval-nozzle (300). The carrier gas (304) enters the Laval-nozzle (300) and is accelerated. The carrier gas jet (305) then leaves the Laval-nozzle (300). The Laval-nozzle (300) comprises a section that has a constant diameter (301), a section that converges (302a) in the flow direction (302), a throat (303a) and a divergent section (303). In the Laval-nozzle (300) the carrier gas is accelerated to a velocity of over 1 Ma.

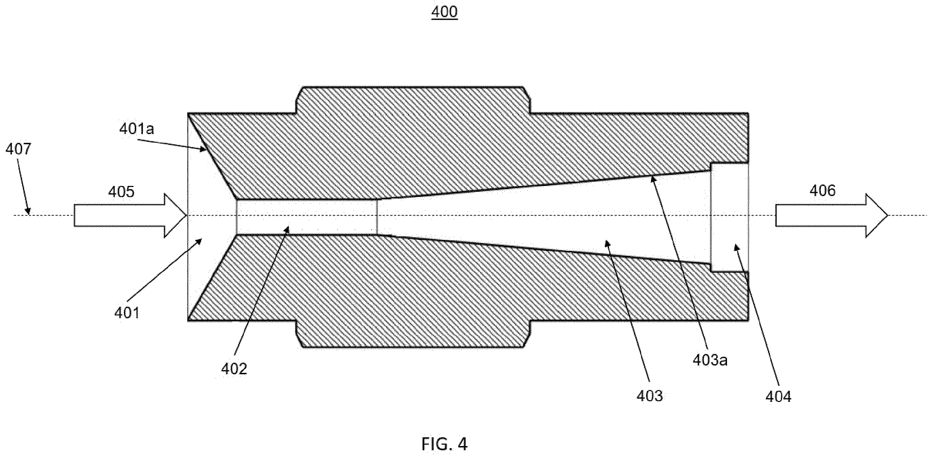

In FIG. 4, the deagglomeration conduit (400) for use in feeding and mixing device (200) is shown. The carrier gas passage (407) extends along a longitudinal axis through said deagglomeration conduit (400). The deagglomeration conduit (400) comprises an inlet funnel (401), a conduit having a constant inner diameter (402) and a diffuser nozzle (403) diverging in said flow direction (403a). Furthermore, an outlet (404) is shown that can be connected to means to inject the deagglomerated particles (e.g. deagglomerated particulate carbon containing particles) (406) into the reactor.

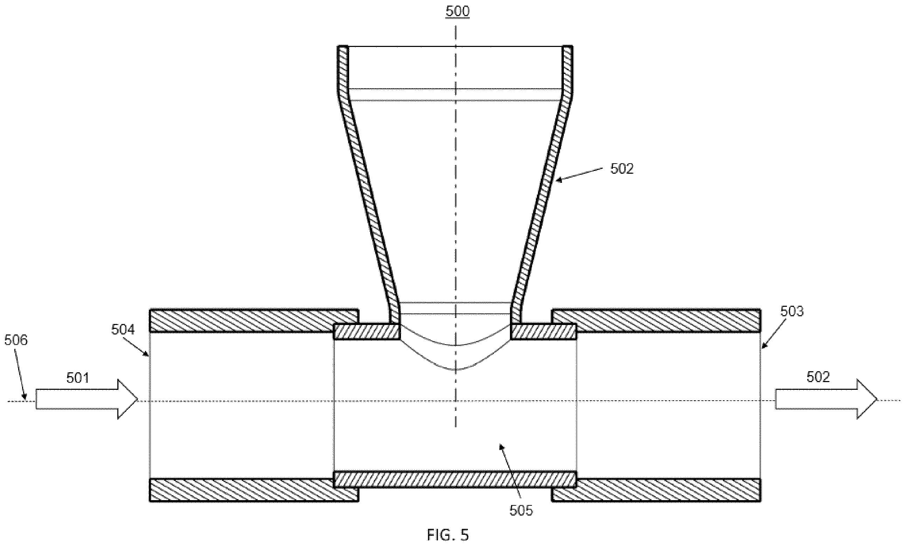

In FIG. 5, an alternative feeding and mixing device (500) is shown. The carrier gas passage (506) is also indicated in FIG. 5. The carrier gas passage (506) extends along a longitudinal axis through said feeding and mixing device. Said feeding and mixing device (500) comprises an inlet (504) for the carrier gas (501), a mixing chamber (505), an inlet for particles (502), and an outlet (503). A carrier gas (501) enters the feeding and mixing device (500). The carrier gas (501) should have a desirable velocity such as below 1 Ma or between 2 m/s to 1 Ma or between 20 m/s to 200 m/s. The particles such as the particulate carbon black-containing feedstock (202) are perpendicularly injected into the mixing chamber (507). Accordingly, the particles will be entrained in the accelerated carrier gas. The abrupt acceleration of the particles results in a deagglomeration of the particles. The outlet (503) can be connected to a reactor. Similar to the feeding and mixing device (200), a screw conveyor and at least one pressure tank can be installed.

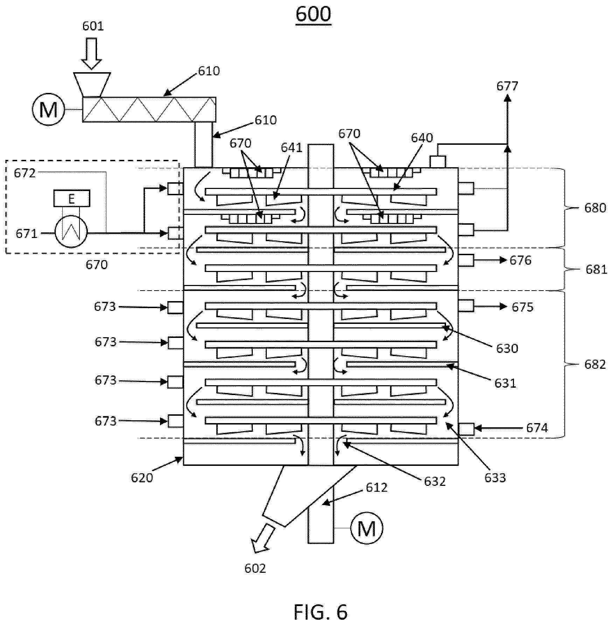

In FIG. 6, a multi-layered pyrolysis reactor (600), particularly a multiple hearth furnace, for the heat treatment of a particulate carbon black-containing feedstock is shown. The multi-layered pyrolysis reactor (600) (hereinafter referred to as reactor) comprises three zones, namely a pyrolysis zone (680), a buffer zone (681) and a gasification zone (682). The reactor can be a vessel defining a reactor chamber. The vessel can be a pressure vessel.

The multi-layered pyrolysis reactor comprises an upper inlet (610) for the particulate carbon black-containing feedstock (601) to be treated. In FIG. 6 a screw conveyer (611) is shown that transfers particulate carbon black-containing feedstock (601) to the upper inlet (610) and onto the upper hearth of the reactor (600). The screw conveyer (611) is driven by a motor.

The reactor further comprises a rotating central shaft (612), an outer casting (620) to which a plurality of hearths (630, 631) are fastened. In FIG. 6, seven hearths (630, 631) are shown. The number of hearths (630, 631) are not particularly limited. However, the reactor (600) should comprise at least two hearths so that the pyrolysis can take place at the upper hearth and the gasification can take place at the lower hearth. The reactor is configured so that multiple superimposed annular hearths (630, 631) are present.

The reactor further comprises multiple rabble arms (640) provided with rabble tines (641) above each hearth (630, 631) and rotated by the rotating central shaft (612), said hearths (630, 631) alternately and respectively having an opening (632) proximal to the rotating central shaft (612) and an opening (633) distal to the rotating central shaft (612) so as to give the material to be treated a spiral path along the height of the furnace. In other words, the multiple rabble arms (640) and hearths (630, 631) are configured to transfer the material radially along each hearth in an alternating inward and outward direction to affect a downward cascading of the material from one hearth to the next hearth therebelow.

Furthermore, the reactor (600) comprises an electrical heating unit (670). The electrical heating unit (670) is configured to heat the material to 360 to 740 °C in the pyrolysis zone (680). In the figure, the electrical heating unit (670) comprises an electrical heating unit (670) that is inside the reaction chamber and an electrical heating unit (670) that is positioned outside the reactor.

The electrical heating unit (670) that is inside the reaction chamber can be an electrical heating element that is positioned above the rabble arms in the pyrolysis zone (180). In other words, it is intended that the electrical heating unit (670) is positioned above each rabble arms on each hearth. Said electrical heating unit (670) can provide the necessary temperature for the pyrolysis.

In addition, or alternatively, an electrical heating unit (670) is provided outside the reactor. A first inert gas stream (671), such as nitrogen, is subjected to an electrical heater to obtain a heated inert gas stream, such as a heated nitrogen stream. A second inert gas stream (672), such as nitrogen, is connected to the heated nitrogen stream. The second inert gas stream (672) can be used to precisely control the temperature of the inert gas stream subjected into the reactor (600), i.e. reaction chamber. In a preferred embodiment, the electrical heating unit (670) comprises an electrical heating unit (670) that is inside the reaction chamber and an electrical heating unit (670) that is positioned outside the reactor.

The numbering of the hearths starts with the uppermost hearth. The third hearth in FIG. 6 is an optional buffer hearth that should not be separately heated.

Alternatively, or additionally, a microwave heating unit can be installed, preferably at heat hearth of the reactor (100). The microwave heating unit is generally configured to assist the heating of the material to be treated. It is desired that the heating unit comprises an electrical heating unit as well as a microwave heating unit. The electrical heating unit generally heats a gas stream, comprising nitrogen or consisting of nitrogen, and the heated gas stream is subjected to the reactor. The microwave can additional heat the material to be treated so that the desired temperature for the pyrolysis can be achieved.

The reactor (600) further comprises a burner (673) for each hearth in the gasification zone (682). For example, a burner (673) is present on each of the four lowermost hearths. Each burner (673) is supplied with fuel and oxygen. It is specifically preferred that hydrogen is the fuel (i.e. oxyhydrogen). However, a natural gas, such as methane, ethane or propane, can be used as fuel as well. It is possible that multiple burners (673) for each hearth in the gasification zone (682) are disposed circumferentially around the interior of said reaction chamber.

The number rabble arms (640) comprising rabble tines (641) is not specifically limited but the number of rabble arms (640) regulates the residence time of the material on each hearth. It is preferred that the number of rabble arms (640) provided with rabble tines (641) above each hearth (630, 631) is from 1 to 5, preferably 1 to 4, such as 1, 2, 3 or 4. It should be noted that the number of rabble arms (640) specifically relate to the rabble arms (640) comprising rabble tines (641). It is possible that the reactor comprises further rabble arms (640) without rabble tines. Often, a fixed number of rabble arms are present on each hearth and if a specific number of number of rabble arms (640) provided with rabble tines (641) is desired, the rabble tines are mounted to the desired number rabble arms.

The residence time of the material on each hearth can be from 1 to 60 min, preferably 2 to 45 min, more preferably 3 to 37 min, and most preferably 4 to 20 min. For instance, the residence time of the material in the pyrolysis zone on each hearth is 1 to 20 min, preferably 2 to 15 min, more preferably 3 to 13 min, and most preferably 4 to 10 min. For instance, the residence time of the material in the gasification zone on each hearth is 30 to 40 min. The total residence time on all hearths in the pyrolysis zone can be 5 to 60 min, preferably 6 to 40 min, more preferably 6 to 25 min, and most preferably 7 to 15 min. The total residence time on all hearths in the gasification zone can be 1 h to 4 h, preferably 2 h to 2.5 h.

The temperature of each hearth in the pyrolysis zone should be from 360 to 740 °C, preferably 400 to 720 °C, more preferably 500 to 700 °C, most preferably 600 to 700 °C. The temperature of each hearth in the gasification zone should be from 750 to 950 °C, preferably 750 to 900 °C, more preferably 750 to 850 °C, most preferably 750 to 800 °C.

The reactor further comprises a steam inlet (674) provided at the lowermost hearth in the gasification zone (682). It is desired that 1 to 200 kg/h steam, 5 to 150 kg/h steam, 10 to 100 kg/h steam, 20 to 60 kg/h steam, 30 to 45 kg/h steam, is subjected at the lowermost hearth. The reactor further comprises a gasification gases outlet (675) at the uppermost hearth of the gasification zone (682). The reactor further comprises a buffer gases outlet (676) at the hearth of the buffer zone (681). The reactor further comprises a pyrolysis gases outlet (677) at the uppermost hearth of the pyrolysis zone (680).

The treated carbon black (602) is collected at the bottom of the reactor (600).

In addition, the present invention will be described by means of the following aspects.

1. A method for the recycling of carbon black comprising:

(a) pyrolysis of particulate carbon black-containing feedstock at a temperature of 360 °C to 740 °C and in the absence of oxygen, wherein a pyrolysis gas stream and a pyrolyzed carbon black-containing particulate are obtained,
(b) gasification of the pyrolyzed carbon black-containing particulate at a temperature of 750 °C to 950 °C,
(c) obtaining treated carbon black after the gasification.

2. The method according to aspect 1, wherein the pyrolysis (a) and gasification (b) are carried out in separate processes, and/or the pyrolysis (a) is carried out in a first reactor and the gasification (b) is carried out in a second reactor, wherein the first reactor and the second reactor are different reactors.

3. The process according to any one of aspects 1 or 2, wherein the pyrolyzed carbon black-containing particulate is milled before subjected to the gasification (B).

4. The method according to aspect 1, wherein the pyrolysis (a) and gasification (b) are carried out as a continuous process, and/or the pyrolysis (a) and gasification (b) are carried out in a multi-layered pyrolysis reactor, such as a multiple hearth furnace.

5. The method according to any one of the preceding aspects, wherein pyrolysis of particulate carbon black-containing feedstock is carried out in an inert atmosphere, preferably in a nitrogen atmosphere, and/or the pyrolysis is carried out in a reaction chamber and the oxygen content in the reaction chamber is less than 1000 ppm, preferably 100 ppm, based on the total weight of the atmosphere in the reaction chamber.

6. The method according to any one of the preceding aspects, wherein the pyrolysis gas stream is used to at least partially heat the pyrolysis (A) process and/or the gasification (B) process, and/or the pyrolysis gas stream is used as fuel for a burner to at least partially heat the pyrolysis (A) process and/or the gasification (B) process.

7. The method according to any one of the preceding aspects, wherein the pyrolysis of particulate carbon black-containing feedstock is carried out at a temperature of 380 °C to 730 °C, preferably 400 to 680 °C, more preferably 450 to 650 °C, and most preferably 490 to 600 °C.

8. The method according to any one of the preceding aspects, wherein the pyrolysis of particulate carbon black-containing feedstock is carried out at a pressure of 0.5 to 2 bar, preferably 0.7 to 1.5 bar, more preferably 0.8 to 1.3 bar, and most preferably 0.9 to 1.1 bar.

9. The method according to any one of the preceding aspects, wherein

(i) the residence time of the particulate carbon black-containing feedstock for the pyrolysis (A) is from 5 to 60 min, preferably 6 to 40 min, more preferably 6 to 25 min, and most preferably 7 to 15 min, and/or
(ii) the residence time of the particulate carbon black-containing feedstock for the pyrolysis (a) on each hearth of a multi-layered pyrolysis reactor is from 1 to 20 min, preferably 2 to 15 min, more preferably 3 to 13 min, and most preferably 4 to 10 min.

10. The method according to any one of the preceding aspects, wherein the pyrolysis is carried out in rotary kiln, auger, fixed bed, and/or in a multi-layered pyrolysis reactor and the gasification is carried out in a fluidized bed reactor, auger reactor, hearth furnace, or multi-layered gasification reactor.

11. The method according to any one of the preceding aspects, wherein the particulate carbon black-containing feedstock is heated to the required temperature for the pyrolysis (a) by using an electrical heating unit, preferably the electrical heating unit heats an inert gas stream, such as a nitrogen gas stream, to the required temperature and the heated inert gas stream, such as a nitrogen gas stream, is subjected to the particulate carbon black-containing feedstock for the pyrolysis (a).

12. The method according to any one of the preceding aspects, wherein the atmosphere during the pyrolysis for the particulate carbon black-containing feedstock comprises nitrogen, preferably at least 1 vol.-% nitrogen, such as at least 5 vol.-% nitrogen, at least 10 vol.-% nitrogen, at least 15 vol.-% nitrogen, at least 20 vol.-% nitrogen, or at least 25 vol.-% nitrogen, based on the total volume of the atmosphere during the pyrolysis.

13. The method according to any one of the preceding aspects, wherein the pyrolysis is carried out by subjecting the particulate carbon black-containing feedstock with heated nitrogen to provide the desired temperature.

14. The method according to any one of the preceding aspects, wherein the atmosphere during the pyrolysis for the particulate carbon black-containing feedstock comprises less than 20 mol.-% $H_2O$, such as less than 15 mol.-% $H_2O$, less than 10 mol.-% $H_2O$, less than 5 mol.-% $H_2O$, less than 3 mol.-% $H_2O$, less than 2 mol.-% $H_2O$, or less than 1 mol.-% $H_2O$, based on the total volume of the atmosphere during the pyrolysis.

15. The method according to any one of the preceding aspects, wherein the particulate carbon black-containing feedstock comprises (or is) rubber granulate, plastic granulate, and/or biomass-based granulate, preferably the particulate carbon black-containing feedstock comprises rubber granulate comprising carbon black.

16. The method according to any one of the preceding aspects, wherein the method further comprises, size reducing of tires and optionally milling to provide rubber granulate comprising carbon black, wherein the rubber granulate is used as the particulate carbon black-containing feedstock for the pyrolysis (A).

17. The method according to any one of the preceding aspects, wherein the particulate carbon black-containing feedstock is derived from a tire, preferably a pneumatic tire, a tire tread, a tire belt, a tire belt reinforcement, a tire carcass, a tire carcass reinforcement, a tire sidewall, tire inner liner, tire apex, tire shoulder, tire hump strip, tire chafer, a tire bead filler

18. The method according to any one of the preceding aspects, wherein particulate carbon black-containing feedstock is derived from a cable sheath, a tube, a drive belt, a conveyor belt, a roll covering, a shoe sole, a hose, a sealing member, a profile, a damping element, a coating or a colored or printed article.

19. The method according to any one of the preceding aspects, wherein at least 50 wt.-%, preferably at least 60 wt.-%, more preferably at least 70 wt.-%, most preferably at least 80 wt.-%, of the particulate carbon-containing feedstock has a particle size of more than 2 to 2.8 mm, wherein the particle size is measured according to ASTM D1511-12 (2017) using an additional U.S. Standard Sieves or equivalent, conforming to Specification ASTM E11, Sieve Nos. 7, having openings of 2800 $\mu$m. The sieves shall be 25 mm in height and 200 mm in diameter.

20. The method according to any one of the preceding aspects, wherein at least 50 wt.-%, preferably at least 60 wt.-%, more preferably at least 70 wt.-%, most preferably at least 80 wt.-%, of the particulate carbon-containing feedstock has a particle size of more than 1 to 2 mm, wherein the particle size is measured according to ASTM D 1511-12 (2017).

21. The method according to any one of the preceding aspects, wherein the particle size distribution of the particulate carbon-containing feedstock can be measured according to ASTM D 1511-12 (2017) and (a) Sieve No. 10 retains 10 to 70 wt.-%, preferably 15 to 65 wt.-%, more preferably 25 to 60 wt.-%, and most preferably 30 to 55 wt.-% of the particulate carbon-containing feedstock, and/or (b) Sieve No. 18 retains 1 to 25 wt.-%, preferably 2 to 20 wt.-%, more preferably 4 to 15 wt.-%, and most preferably 5 to 12 wt.-% of the particulate carbon-containing feedstock, and/or (c) Sieve No. 35 retains 0 to 10 wt.-%, preferably 1 to 8 wt.-%, more preferably 2 to 7 wt.-%, and most preferably 3 to 8 wt.-% of the particulate carbon-containing feedstock, and/or (d) Sieve No. 60 retains 0 to 10 wt.-%, preferably 1 to 8 wt.-%, more preferably 2 to 7 wt.-%, and most preferably 3 to 7 wt.-% of the particulate carbon-containing feedstock, and/or (e) Sieve No. 120 retains 0 to 5 wt.-%, preferably 1 to 4 wt.-%, more preferably 1.5 to 3 wt.-%, and most preferably 2 to 2.5 wt.-% of the particulate carbon-containing feedstock, and/or (f) Bottom receive pan comprises less than 4 wt.-%, preferably less than 3 wt.-%, more preferably 0 to 2 wt.-%, and most preferably 0.01 to 1 wt.-% of the particulate carbon-containing feedstock.

22. The method according to any one of the preceding aspects, wherein the particulate carbon black-containing feedstock comprises zinc, preferably zinc oxide.

23. The method according to any one of the preceding aspects, wherein the particulate carbon black-containing feedstock has a zinc content in a range of from 2.0 to 6.0 mass %, preferably from 2.5 to 5.5 mass %, more preferably from 3.0 to 5.0 mass %, most preferably from 3.5 to 4.5 mass %, wherein the zinc content is based on the total mass of particulate carbon black-containing feedstock and wherein the zinc content is preferably determined according to Inductively Coupled Plasma Optical Emission Spectrometry (ICP-OES), more preferably the zinc content is determined as described in the specification.

24. The method according to any one of the preceding aspects, wherein the particulate carbon black-containing feedstock has a silicon (Si) content in a range of from 1.5 to 7.0 wt.-%, preferably from 1.8 to 6.0 wt.-%, more preferably from 2.0 to 5.0 wt.-%, most preferably from 2.2 to 4.5 wt.-%, wherein the wt.-% is based on the total weight of the particulate carbon black-containing feedstock and wherein the silicon content is preferably determined by to Inductively Coupled Plasma Optical Emission Spectrometry (ICP-OES), more preferably the silicon content is determined as described in the specification.

25. The method according to any one of the preceding aspects, wherein silica (or silicon in form of silica) is embedded in the carbon black of the particulate carbon black-containing feedstock, attached to the carbon black of the particulate carbon black-containing feedstock, attached on the surface of the carbon black of the particulate carbon black-containing feedstock, and/or associated in the carbon black of the particulate carbon black-containing feedstock.

26. The method according to any one of the preceding aspects, wherein the particulate carbon black-containing feedstock has a sulfur content in a range of from 1.0 to 4.0 wt.-%, preferably from 2.0 to 4.0 wt.-%, more preferably from 2.0 to 3.0 wt.-%, wherein the wt.-% is based on the total weight of the particulate carbon black-containing feedstock and wherein the sulfur content is determined by elemental analysis as described in the specification.

27. The method according to any one of the preceding aspects, wherein the particulate carbon black-containing feedstock comprises carbon black.

28. The method according to any one of the preceding aspects, wherein the particulate carbon black-containing feedstock (i) comprises at least 5 wt.-% carbon black, preferably at least 15 wt.-% carbon black, more preferably at least 20 wt.-% carbon black, even more preferably at least 25 wt.-% carbon black, and most preferably at least 30 wt.-% carbon black, based on the total weight of the particulate carbon black-containing feedstock, and/or (ii) comprises 5 to 50 wt.-% carbon black, preferably 12 to 45 wt.-% carbon black, more preferably 15 to 40 wt.-% carbon black, more preferably 20 to 35 wt.-% carbon black, and most preferably 25 to 30 wt.-% carbon black, based on the total weight of the particulate carbon black-containing feedstock.

29. The method according to any one of the preceding aspects, wherein the pyrolyzed carbon black-containing particulate is heated to the required temperature for the gasification (b) by using a burner, preferably the fuel for the burner is hydrogen or natural gas, preferably hydrogen.

30. The method according to any one of the preceding aspects, wherein the particulate carbon black-containing feedstock is milled before the gasification step, and/or wherein the obtained treated carbon black is milled after the gasification step.

31. The method according to any one of the preceding aspects, wherein the gasification is carried out for 1 min to 10 h, preferably 10 min to 5 h, more preferably 20 min to 3 h, even more preferably 30 min to 2 h, and most preferably 40 min to 1.5 h.

32. The process according to any one of aspects 1 or 2, wherein the gasification is carried out at a temperature of 750 °C to 910 °C, preferably 760 °C to 900 °C, more preferably 770 to 890 °C, even more preferably 780 °C to 860 °C, and most preferably 790 to 850 °C.

33. The method according to any one of the preceding aspects, wherein the gasification is carried out by using $H_2O$ and/or $CO_2$, preferably $H_2O$.

34. The method according to any one of the preceding aspects, wherein the gasification is carried out by subjecting the material (such as the material after the pyrolysis) with a gas comprising $H_2O$ and/or $CO_2$, preferably $H_2O$.

35. The method according to any one of the preceding aspects, wherein the gasification is carried out by subjecting the material (such as the material after the pyrolysis) with a gas comprising 20 to 100 mol-% $H_2O$ and/or $CO_2$, preferably 30 to 100 mol-% $H_2O$ and/or $CO_2$, more preferably 40 to 90 mol-% $H_2O$ and/or $CO_2$, most preferably 50 to 80 mol-% $H_2O$ and/or $CO_2$, based on the total number of moles of the gas.

36. The method according to any one of the preceding aspects, wherein the gasification atmosphere in which the material (such as the material after the pyrolysis) is treated comprises 20 to 100 mol-% $H_2O$ and/or $CO_2$, preferably 30 to 100 mol -% $H_2O$ and/or $CO_2$, more preferably 40 to 90 mol-% $H_2O$ and/or $CO_2$, most preferably 50 to 80 mol-% $H_2O$ and/or $CO_2$, based on the total number of moles of the gasification atmosphere in which the material (such as the material after the pyrolysis) is treated.

37. The method according to any one of the preceding aspects, wherein the $H_2O$ for the gasification as well as the required heat is provided by at least one hydrogen burner.

38. The method according to any one of the preceding aspects, wherein the gasification is carried out in a fluidized bed reactor, rotary kiln and/or in a multi-layered pyrolysis reactor.

39. The method according to any one of the preceding aspects, wherein the method is carried out in a multiple hearth furnace and the pyrolysis is carried out on a hearth above a hearth for the gasification, wherein $H_2O$ (or steam) used for the gasification is removed from the multiple hearth furnace before entering a hearth for the pyrolysis.

40. Carbon black obtained according to any one of the preceding claims.

41. Use of a multiple hearth furnace for the pyrolysis and gasification of rubber granulate, such as waste tire rubber granulate.

42. Treated carbon black, preferably defined according to anyone of the previous aspects, wherein the treated carbon black has a MOAH value of below 500 mg/kg, preferably below 300 mg/kg, more preferably below 250 mg/kg, and most preferably below 200 mg/kg, determined as described in the specification.

43. Treated carbon black, preferably defined according to anyone of the previous aspects, wherein the treated carbon has a transmittance of at least 80 %, preferably at least 85 %, more preferably at least 90 %, even more preferably at least 95 %, most preferably at least 98 % wherein the transmittance at 355 nm in toluene is measured according to ASTM D 1618-18 against toluene, wherein the transmittance is measured at 355 nm instead of 425 nm.

44. Treated carbon black, preferably defined according to anyone of the previous aspects, wherein the treated carbon has a transmittance of at least 80 %, preferably at least 85 %, more preferably at least 90 %, even more preferably at least 95 %, most preferably at least 98 % wherein the transmittance at 300 nm in toluene is measured according to ASTM D 1618-18 against toluene, wherein the transmittance is measured at 300 nm instead of 425 nm.

45. The treated carbon black to any one of the preceding aspects, wherein treated carbon black has a coke content below 15 wt.-%, preferably below 10 wt.-%, more preferably below 5 wt.-%, and most preferably below 1 wt.-%, based on the total weight of the treated carbon black, is obtained after the gasification.

46. The treated carbon black to any one of the preceding aspects, wherein the treated carbon black has an iodine adsorption number of 30 to 80 mg/g, preferably 40 to 70 mg/g, more preferably 45 to 65 mg/g, the iodine adsorption number is measured according to ASTM D1510-17.

47. The treated carbon black according to any one of the preceding aspects, wherein the treated carbon black has a statistical thickness surface area (STSA) determined according to ASTM D6556-17 in a range from 15 to 500 $m^2/g$, preferably from 20 to 400 $m^2/g$, more preferably from 30 to 300 $m^2/g$, even more preferably from 40 to 200 $m^2/g$, most preferably from 50 to 150 $m^2/g$.

48. The treated carbon black according to any one of the preceding aspects, wherein the treated carbon black has a BET surface area determined according to ASTM D6556-17 in a range from 15 to 500 $m^2/g$, preferably from 30 to 300 $m^2/g$, more preferably from 40 to 250 $m^2/g$, even more preferably from 50 to 200 $m^2/g$, most preferably from 60 to 150 $m^2/g$.

49. The treated carbon black according to any one of the preceding aspects, a compressed oil absorption number (COAN) measured according to ASTM D3493-16 in a range from 30 to 200 mL/100 g, preferably from 40 to 150 mL/100 g, more preferably from 50 to 120 mL/100 g, even more preferably from 55 to 110 mL/100 g, most preferably from 60 to 90 mL/100 g.

50. The treated carbon black according to any one of the preceding aspects, the obtained treated carbon black after the gasification has

(a) a BET surface area determined according to ASTM D6556-17 in a range from 40 to 100 $m^2/g$, preferably from 50 to 80 $m^2/g$, more preferably 55 to 70 $m^2/g$, and a compressed oil absorption number (COAN) measured according to ASTM D3493-16 in a range from 30 to 200 mL/100 g, preferably from 40 to 150 mL/100 g, more preferably from 50 to 120 mL/100 g, even more preferably from 55 to 110 mL/100 g, most preferably from 60 to 90 mL/100 g,

(b) a BET surface area determined according to ASTM D6556-17 in a range from 10 to 100 $m^2/g$, preferably from 20 to 90 $m^2/g$, more preferably 25 to 80 $m^2/g$, and a compressed oil absorption number (COAN) measured according to ASTM D3493-16 in a range from 30 to 200 mL/100 g, preferably from 40 to 150 mL/100 g, more preferably from 50 to 120 mL/100 g, even more preferably from 55 to 110 mL/100 g, most preferably from 60 to 90 mL/100 g, and/or

(c) a BET surface area determined according to ASTM D6556-17 in a range from 200 to 600 $m^2/g$, preferably from 250 to 500 $m^2/g$, more preferably 300 to 450 $m^2/g$, and a compressed oil absorption number (COAN) measured according to ASTM D3493-16 in a range from 30 to 200 mL/100 g, preferably from 40 to 150 mL/100 g, more preferably from 50 to 120 mL/100 g, even more preferably from 55 to 110 mL/100 g, most preferably from 60 to 90 mL/100 g.

51. The treated carbon black according to any one of the preceding aspects, wherein the treated carbon black has a volatile content measured at 950°C of 0.01 to 10 wt.-%, such as 0.3 to 10 wt.-%, 0.5 to 10 wt.-%, 0.7 to 5 wt.-%, 0.8 to 4 wt.-%, 0.9 to 3 wt.-%, 1 to 2.5 wt.-%, 1.1 to 2.3 wt.-%, 1.2 to 2.2 wt.-%, 1.3 to 2.1 wt.-%, 1.4 to 2 wt.-%, 1.5 to 1.9 wt.-%, or 1.6 to 1.8 wt.-%.

52. The treated carbon black according to any one of the preceding aspects, wherein the treated carbon black

(i) has a transmittance of at least 80 %, preferably at least 85 %, more preferably at least 90 %, even more preferably at least 95 %, most preferably at least 98 % wherein the transmittance at 425 nm in toluene is measured according to ASTM D 1618-18 against toluene, and/or

(ii) has a transmittance of at least 80 %, preferably at least 85 %, more preferably at least 90 %, even more preferably at least 95 %, most preferably at least 98 % wherein the transmittance at 355 nm in toluene is measured according to ASTM D 1618-18 against toluene, wherein the transmittance is measured at 355 nm instead of 425 nm, and/or

(iii) has a transmittance of at least 80 %, preferably at least 85 %, more preferably at least 90 %, even more preferably at least 95 %, most preferably at least 98 % wherein the transmittance at 300 nm in toluene is measured according to ASTM D 1618-18 against toluene, wherein the transmittance is measured at 300 nm instead of 425 nm.

53. The treated carbon black according to any one of the preceding aspects, wherein the volume average particle size x50 of the obtained treated carbon black is from 0.3 to 50 $\mu$m preferably 0.5 to 50 $\mu$m, more preferably 0.8 to 20 $\mu$m, and most preferably 1 to 10 $\mu$m, wherein the volume average particle size is preferably measured as described in the specification by dry measurement using laser diffraction.

54. The treated carbon black according to any one of the preceding aspects, wherein the volume average particle size x90 of the obtained treated carbon black is from 0.3 to 50 $\mu$m preferably 0.5 to 50 $\mu$m, more preferably 0.8 to 20 $\mu$m, wherein the volume average particle size is preferably measured as described in the specification by dry measurement using laser diffraction.

55. The treated carbon black according to any one of the preceding aspects, wherein the volume average particle size x95 of the obtained treated carbon black is from 0.3 to 50 $\mu$m preferably 0.5 to 50 $\mu$m, more preferably 0.8 to 20 $\mu$m, wherein the volume average particle size is preferably measured as described in the specification by dry measurement using laser diffraction.

56. The treated carbon black according to any one of the preceding aspects, wherein volume average particle size x99 of the obtained treated carbon black is from 0.3 to 50 $\mu$m preferably 0.5 to 50 $\mu$m, more preferably 0.8 to 20 $\mu$m, wherein the volume average particle size is preferably measured as described in the specification by dry measurement using laser diffraction.

57. The treated carbon black according to any one of the preceding aspects, wherein the treated carbon black has an ash content in a range of from 5 to 50 wt.-%, preferably from 10 to 40 wt.-%, more preferably from 10 to 30 wt.-%, most preferably from 15 to 25 wt.-%, wherein the wt.-% is based on the total weight of the treated carbon black and wherein the ash content is determined according to ASTM D 1506-15 at 550 °C, 16 h.

58. The treated carbon black according to any one of the preceding aspects, wherein the treated carbon black has a MOSH/POSH value of below 900 mg/kg, preferably below 500 mg/kg, more preferably below 300 mg/kg, even more preferably below 150 mg/kg and most preferably below 100 mg/kg, determined as described in the specification.

59. The treated carbon black according to any one of the preceding aspects, wherein the treated carbon black comprise ash, wherein ash comprise metal, metal compounds, silicon, sulphur and/or silica, preferably metal comprises zinc, silicon, calcium, cobalt, manganese, potassium, aluminum, and/or iron.

60. The treated carbon black according to any one of the preceding aspects, wherein the treated carbon black has a C (carbon) content of 50 wt.-% or more, preferably 60 wt.-% or more, more preferably 65 to 90 wt.-%, even more preferably 65 wt.-% to 80 wt.-%, and most preferably 70 to 75 wt.-%, determined as described in the specification.

61. The treated carbon black according to any one of the preceding aspects, wherein the treated carbon black has a H (hydrogen) content of less than 2 wt.-%, preferably less than 1.2 wt.-%, more preferably less than 0.8 wt.-%, even more preferably less than 0.5 wt.-%, and most preferably 0.01 to 0.3 wt.-%, determined as described in the specification.

62. The treated carbon black according to any one of the preceding aspects, wherein the treated carbon black has a H (hydrogen) to C (carbon) ratio of 0.001 to 0.3, preferably 0.005 to 0.2, more preferably 0.01 to 0.1, even more preferably 0.02 to 0.06, and most preferably 0.02 to 0.04, wherein the C and H content are determined as described in the specification

63. A rubber article comprising the treated carbon black according to anyone of the preceding aspects.

64. The rubber article according to aspect 63, wherein the rubber article is a tire.

65. A method for the purification of carbon black comprising:

gasification, preferably gasification as described in any one of the preceding aspects, of a carbon black-containing feedstock at a temperature of 750 °C to 950 °C.

## EXAMPLES

Rubber granulate 1, i.e. Gummigranulat 1,6 - 3,2 mm, used in the experiments was obtained from ESTATO Umweltservice GmbH (ESTATO), Germany. The rubber granulate was derived from waste tires and comprises synthetic rubber (SBR) and natural rubber (NR). However, it is also possible to use different particulate carbon black-containing feedstocks such as plastic granulates or biomass-based granulates. The rubber granulate 1 comprises carbon black.

## Example A: Continuous process for pyrolysis and gasification

The rubber granulate 1 was transported on a conveyor belt and then fed into a 36 inch multiple hearth furnace having six hearths (floors) from above via a double flap. On each of the six hearths, both the temperature and the residence time of the rubber granulate 1 on the respective floor could be set. The temperature could be regulated using natural gas burners. Each floor was equipped with its own burner. The dwell time could be set via the modification of the number of baffles on the rotating arms and the shaft rotation speed. Said configuration was adapted according to Table 1. This results in different residence times of the used granulate on the different levels. The fewer arms there are, the longer the retention time. In addition to the different temperatures and residence times, the different levels can be operated with varying gas atmospheres. While only the gases required to operate the burners are used on the first two levels, additional steam is introduced on the lowest level. While a temperature of 700 °C is set on the first two shelves, a temperature of 800 °C or 850 °C were selected on the lower four hearths. In this case, the multiple hearth furnace can be divided into two reaction zones. While the pyrolysis reaction takes place on the first two hearths, the test parameters on the lower four hearths are selected so that decoking can take place.

In Example 4A, the rubber granulate 1 was subjected to a pyrolysis reaction without a subsequent gasification. Accordingly, hearths 3 to 6 were not heated and no steam was subjected into the reactor.

Table 1: Process conditions used for the MHF process.

| Hearth | Number of used rabble arms | Residence time / min | Temp. / °C | Subjected steam / kg h$^{-1}$ | Bed depth (moving bed depth) / cm | Dead bed depth / cm |
|---|---|---|---|---|---|---|
| Example 1A | | | | | | |
| 1 | 3 | 12 | 700 | | 1.87 | 4.3 |
| 2 | 2 | 18 | 700 | | 1.83 | 4.3 |
| 3 | 1 | 36 | 800 | | 3.65 | 4.3 |
| 4 | 1 | 36 | 800 | | 3.65 | 4.3 |
| 5 | 1 | 36 | 800 | | 3.65 | 4.3 |
| 6 | 1 | 36 | 800 | 40 | 3.65 | 4.3 |
| Example 2A | | | | | | |
| 1 | 3 | 12 | 700 | | 1.87 | 4.3 |
| 2 | 2 | 18 | 700 | | 1.83 | 4.3 |
| 3 | 1 | 36 | 850 | | 3.65 | 4.3 |
| 4 | 1 | 36 | 850 | | 3.65 | 4.3 |
| 5 | 1 | 36 | 850 | | 3.65 | 4.3 |
| 6 | 1 | 36 | 850 | 10 | 3.65 | 4.3 |
| Example 3A | | | | | | |
| 1 | 3 | 12 | 700 | | 1.87 | 4.3 |
| 2 | 2 | 18 | 700 | | 1.83 | 4.3 |
| 3 | 1 | 36 | 800 | | 3.65 | 4.3 |
| 4 | 1 | 36 | 800 | | 3.65 | 4.3 |
| 5 | 1 | 36 | 800 | | 3.65 | 4.3 |
| 6 | 1 | 36 | 800 | 10 | 3.65 | 4.3 |
| Example 4A Pyrolysis | | | | | | |
| 1 | 3 | 12 | 700 | | 1.87 | 4.3 |
| 2 | 2 | 18 | 700 | | 1.83 | 4.3 |
| 3 | 1 | 36 | Not heated | | 3.65 | 4.3 |
| 4 | 1 | 36 | Not heated | | 3.65 | 4.3 |
| 5 | 1 | 36 | Not heated | | 3.65 | 4.3 |
| 6 | 1 | 36 | Not heated | 0 | 3.65 | 4.3 |

In table 2, the process conditions are summarized. The air flow (Air) as well as the natural gas flow (NG) is indicated for the burner of hearths 3 to 6. The feed rate for Example 4A was 22.6 kg/h.

Table 2: Process conditions used for the MHF process.

| Example | 1A | 2A | 3A |
|---|---|---|---|
| Air / Nm$^3$/h | 90 | 102 | 59 |
| NG / Nm$^3$/h | 10 | 11.48 | 6.2 |
| Steam flow / kg h$^{-1}$ | 40 | 10 | 10 |
| Production Rate kg/h | 7.56 | 7.15 | 8.78 |
| Feeding rate kg/ h | 23.76 | 24.5 | 23.76 |
| Pyrolysis Yield / wt.-% | 43 | 43 | 43 |
| De-coking Yield / wt.-% | 73 | 69 | 85 |
| Total solid Yield / wt.-% | 31 | 30 | 37 |
| Calc. removed carbon / wt.-% | 27 | 31 | 15 |

The pyrolysis yield is the yield after the pyrolysis in the first two hearths. For the determination of the pyrolysis yield, the gasification process was omitted and the yield after the pyrolysis was noted. The de-coking yield is the yield after the gasification based on the feedstock subjected to the gasification. Accordingly, Example 1A has a yield of 73 wt.-% based on the feedstock subjected to the gasification so that 27 wt.-% of carbon was converted to gas. It is believed that the coke present in the feedstock has a higher reactivity compared to carbon black. If the temperature during the gasification is below 950 °C, the coke is selectivity converted instead of the carbon black. At higher temperatures, the selectivity decreases. Accordingly, in Example 1A, it is believed that the calc. removed carbon of 27 wt.-% is coke.

The properties of two commercial recovered carbon blacks (A1 (producer 1) and A2 (producer 2); both obtained after the pyrolysis of waste tire rubber granulate) and the obtained treated carbon blacks are shown in table 3.

Table 3: Properties of the treated carbon black.

| | Commercial rCB A1 | Commercial rCB A2 | Example 1A | Example 2A | Example 3A | Example 4A |
|---|---|---|---|---|---|---|
| Toluene transmittance[1] at 300 nm[1] / % | 0.0 | 9.5 | 94.5 | 94.25 | 88.84 | 0.03 |
| Toluene transmittance[1] at 355 nm[1] / % | 18.4 | 89.5 | 99.2 | 99.50 | 97.97 | 0.75 |
| Toluene transmittance[2] at 425 nm[2] / % | 79.2 | 99.7 | 99.9 | 99.76 | 100 | 28.82 |
| Ash content[3] / wt.-% | 23.9 | 22.8 | 31.9 | 30.7 | 30.1 | 27.7 |
| STSA[4] / m$^2$ g$^{-1}$ | 60.9 | 58.1 | 63.4 | 64.3 | 56.1 | 47 |
| BET[5] / m$^2$ g$^{-1}$ | 72.4 | 71.3 | 79.8 | 82.5 | 66.4 | 53.3 |
| C / wt.%[6] | n.D. | n.D. | 66.36 | 70.27 | 67.4 | 67.81 |
| H / wt.%[6] | n.D. | n.D. | 0.2 | 0.33 | 0.21 | 1.16 |
| N / wt.%[6] | n.D. | n.D. | 0.1 | 0.09 | 0.1 | 0.15 |
| S / wt.%[6] | n.D. | n.D. | 1.76 | 1.97 | 1.94 | 1.7 |
| O / Wt.%[7] | n.D. | n.D. | 1.31 | 1.34 | 1.18 | 3.09 |
| H:C / atomic ratio | n.D. | n.D. | 0.036 | 0.056 | 0.037 | 0.203 |

(continued)

| | Commercial rCB A1 | Commercial rCB A2 | Example 1A | Example 2A | Example 3A | Example 4A |
|---|---|---|---|---|---|---|
| O:C / atomic ratio | n.D. | n.D. | 0.015 | 0.014 | 0.013 | 0.034 |

[1]Transmittance (Transmittance of Toluene Extract) was measured in accordance with ASTM D 1618-18 against toluene expect that the wavelength for the measurement was 300 nm or 355 nm instead of 425 nm.
[2]Transmittance at 425 nm in toluene (Transmittance of Toluene Extract) was measured according to ASTM D 1618-18 against toluene.
[3]The ash content was measured according to ASTM D 1506-15 at 550 °C, 16 h.
[4]STSA surface area was measured according to ASTM D6556-21.
[5]BET surface area was measured according to ASTM D6556-21.
[6]The mass factions are determined as mentioned below (CHNS content determination and O content determination).
[7]The mass factions are determined as mentioned below (O content determination).

It can be observed that the ash content for the treated carbon black in the MHF is higher than for the two commercial rCBs. This is due to the fact that additional steam and a treatment at higher temperatures was used in the MHF in order to de-coke the material. This causes some of the carbon to react with the steam to form carbon monoxide. Consequently, a reduced carbon content results in a higher ash content.

Moreover, the treated carbon black obtained from the tests in the MHF has higher transmission values than two commercial rCBs. It can therefore be concluded that the rCB produced in the reactor is loaded with fewer organic, toluene extractable contaminants (such as aliphatics and small aromatics), than the two commercial rCBs.

Example 4A reveals that the H:C atomic ratio is significantly higher than the H:C atomic ratio of Examples 1A, 2A and 3A. This is an indication that contaminants are present on the carbon black obtained in Example 4A which are removed following decoking.

### Example B: Stepwise process for pyrolysis and gasification

Rubber granulate 2, i.e. Gummigranulat 0,0 - 0,5 mm (Article Nr. 005GUM), used in the following experiments was obtained from ESTATO Umweltservice GmbH (ESTATO), Germany. The rubber granulate was derived from waste tires and comprises synthetic rubber (SBR) and natural rubber (NR). The particle fractions are shown in table 4. Moreover, the weight average particle diameter (Dw50) was about 400 $\mu$m, measured according to ASTM D 1511-00 (2006). However, it is also possible to use different particulate carbon black-containing feedstocks such as plastic granulates or biomass-based granulates.

Table 4: Particle distribution of rubber granulate from ESTATO, measured according to ASTM D 1511-00 (2006).

| | |
|---|---|
| Particle fraction < 0.125 mm | 2.0 wt.-% |
| Particle fraction 0.125 - 0.25 mm | 9.6 wt.-% |
| Particle fraction 0.2 5 - 0.50 mm | 34.5 wt.-% |
| Particle fraction 0.50 - 1.0 mm | 45.1 wt.-% |
| Particle fraction 1.0 - 2.0 mm | 8.8 wt.-% |
| Particle fraction < 2.0 mm | 0.0 wt.-% |

The characterization of the rubber granulate from ESTATO is shown in table 5.

Table 5: Characterization of the rubber granulate from ESTATO.

| Property | Measurement | Unit | Value |
|---|---|---|---|
| Carbon mass fraction | See method below | % | 87.623 |
| Hydrogen mass fraction | See method below | % | 7.767 |
| Nitrogen mass fraction | See method below | % | 0.396 |
| Sulfur mass fraction | See method below | % | 2.022 |

(continued)

| Property | Measurement | Unit | Value |
|----------|-------------|------|-------|
| Oxygen mass fraction | See method below | % | 2.191 |
| Water content | ASTM D 4928-12(2018) | % | 2.19 |
| Ash content | ASTM D 1506-15 at 550 °C, 16 h | % | 11.29 |
| Gross Calorific Value | ASTM D 4809:2018 | MJ/kg | 35.121 |

In addition, the rubber granulate comprises several metals in a mass fraction of about 300 ppm. For instance, zinc, and iron.

CHNS content determination by means of elemental analyser

The carbon mass fraction, hydrogen fraction mass, nitrogen mass fraction and sulfur mass fraction (i.e. carbon weight fraction, hydrogen weight fraction, nitrogen weight fraction and sulfur weight fraction) are measured using an elemental analyser with thermal conductivity and infrared detector. The analyser is a device for the fully automatic and quantitative analysis of the above elements. The combustion tube is brought to a temperature of 1100 °C and the reduction tube to 850 °C. First, a blank measurement is conducted. The carbon peak area should have a value < 50, the hydrogen peak area a value < 300, the nitrogen peak area a value < 50 and the sulphur peak area a value < 350. Otherwise, the individual adsorption columns are heated and then empty measurements are started again. The blank measurement is calculated as follows:

$$b = \frac{\sum b_i}{n},$$

wherein b is the blank measurement, $b_i$ is the peak area of the respective blank measurement, n is the number of blank measurements, i is an index of 1 to n.

The compensation of the blank measurement is calculated as follows,

$$acomp. = a - b,$$

wherein acomp. Is the compensated peak area, a is the measured peak area, and b is the blank measurement value.

Next, the daily factor is measured. For this purpose, 3 mg of sulphanilamide and 3 mg of low-level standard (e.g. carbon black standard) are weighed into each of 8 tin capsules. After weighing out the respective sample, it is placed in the capsule press, overlaid with helium for 35 s and then cold-sealed. Subtracting the blank value, the known theoretical element concentration of the standard samples is put in relation to the actually calculated element concentration. This results in the daily factor, which must be between 0.9 - 1.1. If this is not the case, these measurements should be repeated with newly opened standards. Otherwise, a new calibration must be carried out according to the manufacturer's instructions.

The daily factor is calculated as follows,

$$f = \frac{c_{theor.}}{c_{act.}},$$

Wherein f is the daily factor, $c_{theor.}$ is the theoretical factor, $c_{act.}$ is the actual calculated elemental concentration.

Then, 8 tin capsules each containing 5 mg ±1 mg of the desired measured component, such as rubber granulate, are weighed. After weighing the respective samples, they are placed in the capsule press, covered with helium for 35 s and then cold welded.

For the measurement, the combustion tube is enriched with $O_2$. The elements C, H, N and S burn to form $CO_2$, $H_2O$, NOx, $SO_2$ and $SO_3$. Halogen bound in the sample reacts to form volatile halogen compounds. In addition, there are $WO_3$ granules in the combustion tube that provide further $O_2$ as a catalyst, prevent the formation of nonvolatile sulphates and bind interfering alkali and alkaline earth elements. The carrier gas stream is fed into the reduction tube with Cu filling. Nitrogen oxides (NOx) are completely reduced to $N_2$ at the copper contact. $SO_3$ is reduced to $SO_2$. Volatile halogen compounds are bound to the silver wool.

$N_2$ is not adsorbed and enters the thermal conductivity detector as the first measuring component, $CO_2$, $H_2O$ and

$SO_2$ are adsorbed on the respective adsorption columns.

Then, one after the other, the adsorption columns are brought to desorption temperature, so that $CO_2$, then $H_2O$ as carrier gas enters the thermal conductivity detector and $SO_2$ enters the infrared detector. Depending on the type and concentration of the components, the detector delivers an electrical signal which is digitised and integrated. The measurement signal is recorded as a function of time and displayed as an integral value. The absolute element content of the sample is calculated from this integral value of the individual measurement peaks and the calibration factors.

The element concentration is calculated according to the following equation

$$c = \frac{a * 100 * f}{w},$$

wherein c is the elemental concentration (in %), a is the absolute element content (in mg), f is the daily factor, and w is the actual amount of the sample.

O content determination by means of elemental analyser

Depending on the oxygen concentration, an electrical signal is transmitted from the thermal conductivity detector (WLD) of the elemental analyser to a micro controller and then displayed as an integral value. From the integral value of the measurement peaks and the calibration factor, the absolute element content of the sample is concluded.

The pyrolysis tube is heated to a temperature of 1050°C. First, a blank measurement is conducted. The oxygen peak area should have a maximum value of 200. If the blank value is not below 200, CO adsorption column should be heated up (260 °C, CO desorption 150 °C). After the blank values have been successfully measured, the mean value of the blank value areas is calculated.

The blank measurement is calculated as follows:

$$b = \frac{\sum b_i}{n},$$

wherein b is the blank measurement, $b_i$ is the peak area of the respective blank measurement, n is the number of blank measurements, i is an index of 1 to n.

Next, the daily factor is measured. For this purpose, 3 mg of acetanilide are weighed into each of 8 tin capsules. After weighing out the respective sample, it is placed in the capsule press, overlaid with helium for 35 s and then cold-sealed. Subtracting the blank value, the known theoretical element concentration of the standard samples is put in relation to the actually calculated element concentration. This results in the daily factor, which must be between 0.9 - 1.1. If this is not the case, these measurements should be repeated with newly opened standards. Otherwise, a new calibration must be carried out according to the manufacturer's instructions.

The daily factor is calculated as follows,

$$f = \frac{c_{theor.}}{c_{act.}},$$

wherein f is the daily factor, $c_{theor.}$ is the theoretical factor, $c_{act.}$ is the actual calculated elemental concentration.

Then, 8 tin capsules each containing 5 mg $\pm$ 1 mg of the desired measured component, such as rubber granulate, are weighed. After weighing the respective samples, they are placed in the capsule press, covered with helium for 35 s and then cold welded. The samples are then measured.

The element concentration is calculated according to the following equation

$$c = \frac{a * 100 * f}{w},$$

wherein c is the elemental concentration (in %), a is the absolute element content (in mg), f is the daily factor, and w is the actual amount of the sample.

Manufacturing of recovered carbon black in a furnace reactor

Rubber granulate 2 comprising carbon black was injected to the furnace reactor in the choke via a feeding and mixing device having a nozzle. The rubber granulate 2 was derived from waste tires and comprises synthetic rubber (SBR) and natural rubber (NR). The process was performed on a small-scale furnace reactor as shown in FIG. 1. The furnace reactor comprises a combustion chamber, a choke and a tunnel. The choke reduces the diameter to 45 mm and has a length of 4200 mm. Downstream of the choke a reactor tunnel is mounted having a diameter of 200 mm. Rubber granulate was injected to the furnace reactor in the choke via a feeding and mixing device having a nozzle as shown in FIG. 2. The reaction volume of the reactor was about 130 liters. The reaction volume was the volume of the reactor between the position of the injection of the feedstock to the position of the quench. The furnace reactor comprises a combustion chamber, a choke and a tunnel. The choke reduces the diameter to 45 mm. Downstream of the choke a reactor tunnel is mounted having a diameter of 200 mm and has a length of 4200 mm. The feeding and mixing device deagglomerated the rubber granulate by accelerating the particulate carbon black-containing feedstock.

The reactions conditions for the manufacturing of the carbon black are shown in table 6.

Table 6: Reaction conditions in the furnace reactor.

| Combustion Air Flow (STP)[5a] / m³/h | 150 | Nitrogen purge flow (STP) / m³/h | 14 |
|---|---|---|---|
| Natural Gas Flow (STP) / m³/h | 10.3 | Rubber granulate mass flow / kg/h | 25 |
| K value[5b] | 0.66 | Temperature of the hot gas flow / °C | 1500 |
| Combustion air temperature upstream combustion chamber / °C | 354 | Residence time Is | 0.394 |
| Natural Gas temperature upstream combustion chamber / °C | 21 | | |
| [5a]273.15 Kand 101325 Pa [5b]The k value is defined by the ratio of stoichiometric $O_2$ amount that is necessary for the complete stoichiometric combustion of the fuel to the supplied $O_2$ amount | | | |

After the injection of the rubber granulate feedstock, the reaction is quenched with water and the obtained carbon black was dried.

The temperature in the combustion chamber, i.e. the temperature of the hot combustion gases, was controlled by the temperature of the combustion air temperature upstream combustion chamber (i.e. temperature of the oxygen-containing gas). The k value was controlled by the natural gas flow (fuel) into the combustion chamber.

The obtained carbon black was milled to obtain the desired particle size distribution x99 mentioned in the table below.

The obtained carbon black is considered as recovered carbon black 2 and comprises coke.

Gasification of recovered carbon black

Recovered carbon black 1, recovered carbon black 2 and recovered carbon black 3 were subjected to a selective gasification. Recovered carbon 1 black was obtained from a first producer and recovered carbon black 3 was obtained from a second producer and both materials comprise coke. The gasification was carried out in a fluidized bed reactor. The gasification either utilized $H_2O$ or $CO_2$. The conditions for the gasification are shown in table 7. The time indication the said table refers to the residence time in the fluidized bed reactor.

The gasification was carried out in a fluidized bed reactor. The setup comprises a vertically arranged tube made of Inconel having a length of 1,500 mm and inner diameter of 108 mm defining the reactor chamber. The Inconel tube is enclosed on its outer surface along the long axis by insulation and heating modules made from in total eight Fibrothal semishells (each having a power of 2,500 W), forming four heating zones. A gas flow is introduced at the bottom end of the tube from a connected gas supply system. The first heating zone from the bottom end of the tube is used for heating up the gas flow to the desired temperature, the remaining heating zones are for treating material filled into the reactor chamber at the desired temperature. Controlling of the heating shells is done via thermal elements, being positioned between the reactor's external wall and the corresponding heating shell. The temperature in each heating zone is further measured inside the reaction chamber by temperature sensors. Filling of the discontinuous operating fluidized bed is done via the reactor's head.

The reaction chamber of the reactor was filled to about half its volume with the carbon black feedstock to be treated, corresponding to an amount of about 800-2000 g. The heating modules were then powered (100% power) and the carbon black heated to the respective target temperature as indicated below under a continuous gas flow (mixture of steam and nitrogen: 240 Nl/h nitrogen and 140 ml/h water (liquid) = 42 mol % of $H_2O$). When the respective target temperature was approached the power supplied to the heating modules was regulated to hold the respective target temperature. The sample was then maintained at the respective target temperature for the indicated dwell time under the continuous gas low. Subsequently, the heating modules were switched off and the sample was cooled down under the continuous gas flow to ambient temperature and then exposed to air and removed from the reactor for characterization and testing of the obtained treated carbon black.

Table 7: Reaction conditions for the gasification.

| Example | CB feedstock | Temp. / °C | Time / min | $H_2O$ | $CO_2$ | Particle size distributi on x95 / $\mu m^8$ |
|---|---|---|---|---|---|---|
| Comp.1 | Recovered carbon black 1 | N/A | N/A | N/A | N/A | 10.48 |
| 2 | Recovered carbon black 1 | 800 | 30 | X | | 10.48 |
| 3 | Recovered carbon black 1 | 800 | 60 | X | | 10.48 |
| 4 | Recovered carbon black 1 | 750 | 30 | X | | 10.48 |
| 5 | Recovered carbon black 1 | 800 | 30 | | X | 10.48 |
| 6 | Recovered carbon black 1 | 800 | 60 | | X | 10.48 |
| 7 | Recovered carbon black 1 | 750 | 30 | | X | 10.48 |
| 8 | Recovered carbon black 1 | 750 | 60 | | X | 10.48 |
| Comp. 9 | Recovered carbon black 2 | N/A | N/A | | | Not determine d |
| Comp. 10 | Recovered carbon black 2 | 800 | 120 | X | | Not determine d |
| Comp. 11 | Recovered carbon black 3 | N/A | N/A | N/A | N/A | Not determine d |
| 12 | Recovered carbon black 3 | 800 | 120 | X | | Not determine d |
| [8]The particle size was measured as descried below. | | | | | | |

The preparation of the rubber compositions and the in rubber tests are described below. A general process for the production of rubber compounds and their vulcanisates is described in the book: "Rubber Technology Handbook", W. Hofmann, Hanser Verlag 1994.

Determined particle size distribution

The particle size distribution is determined by dry measurement with the measurement system from Sympatec GmbH (Germany) consisting of VIBRI: conveyor unit (by vibration); RODOS: compressed air dispersion; and HELOS BR: measuring unit, laser diffraction. As sample preparation, 0.5 g of the dried material was filled into the funnel. During the measurement, the sample is fed with the VIBRI unit to the compressed air dispersion unit RODOS by vibration. Measurement is accomplished in HELOS BR unit using laser diffraction. OPTICAL concentration ($c_{opt}$) was automatically filtered between 5-15% during the measurement. Three separate measurements of 10 sec using each 0.5 g of the material were recorded. Before each measurement, a background measurement of 15 sec was recorded to minimize noise. The obscuration range was controlled by the feeding rate with automatic adjustment and the hopper gap in the range of 5-15% using an integral factor of 0.2. The dispersing air pressure was set to 3 bar. Reported values (volume distribution) represent the average of three measurements after the data analysis using a standard analysis model in the instrument software.

The properties of the respective carbon blacks were measured and the results are indicated in table 8. The expression "< 2.0" means that respective value was not detected at the indicated limit of quantification.

Table 8: Properties of respective carbon black

| Ex. | STSA[4] / $mm^2/g$ | Volatil es[8] 1% | Toluene transmitt ance[2] at 425 nm | PAH22 content / mg/kg | MOAH[11] / mg/kg | MOSH / POSH[11] / mg/kg | Ash content[3] / wt.-% | Particle size distributi on x99 / $\mu m^8$ |
|---|---|---|---|---|---|---|---|---|
| Comp. 1 | 58.3* | 4.5 | 63.8[10] | 43.8 | 1103* | 1491* | 23.11 | < 5 |
| 2 | 62.1 | 1.6 | 100.0 | 0.628 | < 2.0 | 148 | 22.64 | < 5 |
| 3 | 64.6 | 1.5 | 99.9 | 1.13 | 8.3 | 192 | 23.60 | < 5 |

(continued)

| Ex. | STSA[4] / mm2/g | Volatiles8 1% | Toluene transmittance[2] at 425 nm | PAH22 content / mg/kg | MOAH[11] / mg/kg | MOSH / POSH[11] / mg/kg | Ash content[3] / wt.-% | Particle size distribution x99 / $\mu m^8$ |
|---|---|---|---|---|---|---|---|---|
| 4 | 62.5 | 1.8 | 100.0 | 0.457 | 3.3 | 100 | 22.88 | < 5 |
| 5 | 63.0 | 1.7 | 99.9 | 0.354 | < 2.0 | 34 | 23.61 | < 5 |
| 6 | 59.3 | 2.0 | 99.9 | 1.33 | < 2.0 | 824 | 23.50 | < 5 |
| 7 | 63.8 | 3.5 | 93.8 | n.D. | n.D. | n.D. | 23.59 | < 5 |
| 8 | 63.6 | 2.5 | 99.9 | 0.541 | < 2.0 | 29 | 24.30 | < 5 |
| Comp. 9 | 81 | 1.9 | 58.7 | n.D. | n.D. | n.D. | n.D. | < 5 |
| Comp. 10 | 106.1 | 1.2 | 99.8 | n.D. | n.D. | n.D. | n.D. | < 5 |
| Comp. 11 | 60.9 | 4.5 | 79.2 | n.D. | n.D. | n.D. | n.D. | Not determine d |
| 12 | 69.3 | 1.3 | 99.6 | n.D. | n.D. | n.D. | n.D. | Not determine d |

[9]Volatiles were measured at 950 °C for 7 min as described below.
[10]The PAH22 content was measured as described below.
[11]The MOAH and MOSH/POSH values were determined as mentioned below.
*The rCB of Comp. Example 1 was not milled to particle size distribution x99 of < 5 $\mu m$.

Determination of the mass concentration of Mineral oil hydrocarbons (MOSH/POSH and MOAH) in Carbon black using HPLC/GC-FID

After the extraction of the hydrocarbons (see "Sample preparation and extraction"), the fraction containing MOSH/POSH is separated from the fraction containing MOAH using an online HPLC/GC coupling on a silica gel phase.

The final quantitative determination of both fractions is carried out by a Gaschromatograph (GC) with a flame ionization detector (FID). The following hydrocarbons can be recorded analytically within the scope of this test specification:

*Mineral oil saturated hydrocarbons and Polyolefin oligomeric saturated hydrocarbons (MOSH/POSH):* **MOSH:** Saturated hydrocarbons from mineral oil. These consist of paraffins (open-chain hydrocarbons) and naphthenes (cyclic hydrocarbons), which are usually highly alkylated and either come directly from petroleum or were formed through the hydrogenation of aromatics and other conversion processes during refining. **POSH:** Saturated hydrocarbons, which occur as oligomers from polyolefins (e.g. polyethylene, polypropylene) and related products in plastics and can be transferred to food. The MOSH and POSH hydrocarbons are not separated.

*Mineral oil aromatic hydrocarbons (MOAH):* Hydrocarbons from mineral oil that consist of highly alkylated mono- and/or polyaromatic rings. Saturated and aromatic rings can be present together in partially hydrogenated mineral oils. Hydrocarbons with at least one aromatic ring are included in the MOAH, even if they largely consist of saturated hydrocarbons.

Sample preparation and extraction:

The fiberglass or glass extraction sleeve required to extract the samples is cleaned beforehand. To do this, the sleeve is pre-extracted with cyclohexane for at least 24 hours (Soxhlet extraction with $N_2$ flushing of the condenser). The required glass wool and the extraction devices are also pre-extracted or cleaned with cyclohexane.

To control the influence of the blank value, the cleaned sleeve is extracted with cyclohexane after drying. This extract is processed in the same way as the sample, i.e. by adding 20 $\mu L$ ISTD solution (see tables below) and concentrating the solvent to a final volume of 2.0 mL. After the sample has been homogenized, 3 g of carbon black are weighed into the extraction sleeve. After adding 20 $\mu L$ ISTD solution (specified before extraction), the sleeve is closed with cleaned glass wool. The Soxhlet extraction is then carried out for 24 hours with $N_2$ flushing of the condenser with cyclohexane. After the extraction has been completed and cooled to room temperature, the concentration is carried out on a rotary evaporator/ Büchi Syncore to a final volume of 1 mL. 1.0 mL Cyclohexane is then added to the extract and the glass surface is rinsed with the solvent. For measurement, 50 $\mu L$ of this solution is injected into the Online-HPLC/GC-FID system.

Fractionation and quantification:

For identification and quantification using online HPLC/GC-FID, the fractions of MOSH/POSH and MOAH separated on the normal phase HPLC are transferred to the gas chromatograph. The individual fractions are then chromatographically separated and quantified.

An internal standard solution with 9 substances (different saturated and aromatic hydrocarbons, see Tables 8i and 8ii) is spiked into each sample.

The quantitative calculation of the MOSH/POSH and MOAH fractions is carried out using the peak areas of the Humps or Unresolved Complex Mixture (UCM) for each fraction using the standards via their response factors. Due to the detection using FID, the response factors of the saturated hydrocarbons and the aromatic hydrocarbons are set equal.

For the MOSH/POSH fraction this is usually Bicyclohexyl (CyCy) and for the MOAH fraction it is tri - tert -butylbenzene (TBB) or 2-methylnaphthalene. If coelutions are recognizable, another ISTD is used as an alternative for quantification.

The individual fractions, belonging to the boiling point ranges are also quantified using the internal standards and included as results in the report.

The following results are noted and the total amount of MOSH/POSH and the total amount of MOAH are reported:

MOSH/POSH (C10-C50), total amount
MOSH/POSH ($\geq$C10-$\leq$C16)
MOSH/POSH (>C16-$\leq$C20)
MOSH/POSH (>C20-$\leq$C25)
MOSH/POSH (>C25-$\leq$C35)
MOSH/POSH (>C35-$\leq$C40)
MOSH/POSH (>C40-$\leq$C50)
MOAH (C10-C50), total amount
MOAH ($\geq$C10-$\leq$C16)
MOAH (>C16-$\leq$C25)
MOAH (>C25-$\leq$C35)
MOAH (>C35-$\leq$C50)
Chromatographic separation and detection:
HPLC analysis

To separate the MOSH and MOAH fractions using normal phase chromatography : HPLC separation column: Restek , Allure Silica 5$\mu$m 250mm*2.1mm ID with guard column 30mm * 2.1mm ID

| | |
|---|---|
| Eluent A: | Hexane |
| Eluent B: | Dichloromethane |
| Flow: | 300 $\mu$l/min. |

Gradient program optimized for separating the MOSH/MOAH fractions
MOSH fractionation: approx. Start 2.0 min. Fraction length = 90 sec.
MOAH fractionation: approx. Start 4.0 min. Fraction length = 90 sec.
Backflush the HPLC column after 6.1 min.

GC analysis

Configuration and preparation of the device

Guard column retention gap:

Restek - MXT Siltek Guard Columm Dimension: Length 10m x 0.53mm ID, disabled Separation column: Restek MXT - 1 dimension: length 15 m x 0.25 mm ID; Film thickness 0.25 $\mu$m

| | |
|---|---|
| Carrier gas: | Hydrogen |

(continued)

| Initial temperature: | 60°C |
| Hold time: | 6 min. |
| Oven program: | 20°C/min. to 370 °C Hold = 6.5 min. |
| Detector: | FID |
| detector Temperature : | 380°C |

FID gases: 30 mL/min Hydrogen,
25 mL/min make- up gas (Nitrogen)
300 mL /min Synthetic air

Tables 8i and 8ii: ISTD composition (internal standard solution)

**Table 8i:** MOSH fraction (in elution order):

| Substance | CAS No. | Abbreviation | Concentration |
|---|---|---|---|
| n- Undecane | [1120-21-4] | (C11) | 300 µg / mL |
| Cyclohexylcyclohexane or Bicyclohexyl | [92-51-3] | (CyCy) | 300 µg/mL |
| n- Tridecanes | [629-50-5] | (C13) | 150 µg / mL |
| 5-alpha-Cholestane | [481-21-0] | (cho) | 600 µg / mL |

**Table 8ii:** MOAH fraction (in elution order):

| Substance | CAS No. | Abbreviation | Concentration |
|---|---|---|---|
| Pentylbenzene | [538-68-1] | (5B) | 300 µg / mL |
| 2-Methylnaphthalene | [91-57-6] | (2-MN) | 300 µg / mL |
| 1-Methylnaphthalene | [90-12-0] | (1-MN) | 300 µg / mL |
| 1,3,5-Tri-tert-butylbenzene | [1460-02-2] | (TBB) | 300 µg / mL |
| Perylene | [198-55-0] | (By) | 600 µg / mL |

Volatiles at 950°C

Volatiles at 950°C were measured using a thermogravimetric instrument of Fa. LECO Instrumente GmbH (TGA-701) according to the following protocol: Pans were dried at 650°C for 30 min. The carbon black materials were stored in a desiccator equipped with desiccant prior to measurements. Baked-out pans were loaded in the instrument, tared and filled with between 0.5 g to 10 g carbon black material. Then, the oven of the TGA instrument loaded with the sample-filled pans was gradually heated up to 105°C at 20°C per minute by automated software control and the samples were dried until a constant mass was achieved. Subsequently, the pans were closed by lids, the oven was purged with nitrogen (99.9 vol% grade) and heated up to 950°C at a heating rate of 20°C per minute. The oven temperature was kept at 950°C for 7 min. The content of volatiles at 950°C was calculated using the following equation:

$$Volatiles = \frac{m(prior\ to\ heating) - m(after\ 7\ minutes@950°C)}{m(prior\ to\ heating)} \cdot 100\%.$$

PAH22 content

The PAH22 content was each determined following the method entitled "Determination of PAH content of Carbon Black", dated July 8, 1994, as developed by Cabot Corp., and incorporated by the American Food and Drug Administration (FDA) in the U.S. Code of Federal Regulations (CFR) 21 Sec.178.3297, as follows:

The carbon black material was crushed in a mortar with a pestle until a homogenous powder was obtained. A suitable amount (up to 10 g) of the powder was precisely weighed in a cellulose extraction thimble (MN 645, Macherey-Nagel, Düren, Germany). A glass wool plug and cellulose pieces from an extraction thimble were put on top of the carbon black and the filled thimble then loaded in the extraction chamber of a 100 mL Soxhlet apparatus with a 250 mL round bottom flask. Toluene was added to the flask and the condenser of the apparatus was gently flushed with nitrogen. The sample was then subjected to Soxhlet extraction with toluene in the Soxhlet apparatus for 48 h under light protection at a rate of approx. 10 cycles per hour. The obtained raw extract was then concentrated to slightly over 5 mL by means of a rotary evaporator operated at 40°C and a pressure reduction of 5 kPa as a minimum (Büchi Rotavapor R-200, Büchi Labortechnik AG, 9230 Flawil, Switzerland). The extract was then transferred to a 10 mL volumetric flask and brought to the mark by adding fresh toluene. To an aliquot of the extract were added 17 deuterated PAH standards ($D_8$-Naphthalene, $D_8$-Acenaphthylene, $D_{10}$-Acenaphthene, $D_{10}$-Fluorene, $D_{10}$-Phenanthrene, $D_{10}$-Anthracene, Dio-Fluoranthene, $D_{10}$-Pyrene, $D_{12}$-Benzo[a]anthracene, $D_{12}$-Chrysene, $D_{12}$-Benzo[b]fluoranthene, $D_{12}$-Benzo[k]fluoranthene, $D_{12}$-Benzo[a]pyrene, $D_{14}$-Dibenz[a,h]anthracene, $D_{12}$-Benzo[g,h,i]perylene, $D_{12}$-Indeno[1,2,3-c,d]pyrene and $D_{12}$-Coronene, each in an amount of 200 ng). Then, the extract aliquot was cleaned-up by treatment with a silica gel column (1 g silica gel/13% $H_2O$, 8 to 10 mm inner diameter and 5 $cm^3$ capacity). Subsequently, a further deuterated compound, $D_{12}$-Perylene, was added to the cleaned-up extract as recovery standard in an amount of 200 ng. The thus obtained solution was then used for HRGC/LRMS analysis (Capillary gas chromatography coupled with low resolution mass spectrometry) for PAH identification and quantification using the following instrumentation and conditions: Gas chromatograph: Thermo Scientific GC-Ultra with PTV injector, GC-column: 60 m DB5-MS, 0.25 mm ID, 0.25 $\mu$m film thickness; temperature program GC oven: preheating oven to 80°C, sample injection, holding for 2 min at 80°C, heating with a rate of 25°C/min to 180°C, heating with a rate of 8°C/min to 220°C, heating with a rate of 2°C/min to 250°C, heating with a rate of 3°C/min to 280°C, heating with a rate of 5°C/min to 320°C, hold at 320°C for 21min and 18 seconds; Mass spectrometer: Thermo Scientific Trace DSQ LRMS, operated in the electron impact mode (EI) and Selected Ion Monitoring (SIM Mode); mass resolution: 1 amu; monitoring of molecular and fragment ions for the individual PAH compounds. Calibration check of the instrument was performed for each analysis sequence by injection of mixtures containing all native PAHs of interest and the above-mentioned deuterated standards. Identification of the PAH species was achieved by analysis of the relative retention time, the molecular and fragment ions, and the fragmentation ratio. Quantification was performed using the instrumentation software via the deuterated internal PAHs using the isotope dilution and internal standard method. The PAH22 content was calculated by summing up the individual determined concentrations of the 22 PAH compounds, whereby for compounds, whose concentration were below the limit of quantification (LOQ), the LOQ was adopted as the respective concentration.

Results

As can be seen from table 8. The surface area STSA is increased after the gasification of the recovered carbon black. Moreover, the toluene transmittance at 425 nm, PAH 22, MOAH, and MOSH/POSH could be significantly reduced. It is believed that the gasification of recovered carbon black according to the invention results in a significantly improved carbon black having less impurities.

In-Rubber tests

The rubber compositions are mentioned in table 9. The ESBR Buna SB 1500 was introduced to a laboratory mixer GK1.5E with an intermeshing PES5-rotor geometry made by Harburg Freudenberger and milled for 30 seconds at a chamber temperature of 40°C, a fill factor of 0.66 and a rotor speed of 45 rpm. Subsequently, half of the carbon black volume, ZnO and stearic acid were added under milling. After 90 seconds the other half of the carbon black volume and the 6PPD were added. After further 90 secs the ram was lifted and cleaned, and the batch was mixed for another 90 seconds. The total mixing time in the internal mixer was 5 minutes and afterwards the batch was dropped on an open mill for cooling down and additional distributive mixing. The batch temperature did not exceed 160°C in the first mixing step. The batch was allowed to rest overnight.

During the second and final mixing step the sulfur and the accelerator (Vulkacit CZ/EG-Z) were then added in the indicated amounts to the master batch obtained from the first mixing step. The resulting mixture was milled in the GK1.5E mixer with a chamber temperature of 40°C and a fill factor of 0.64 for 2 minutes. The rotor speed was 30 rpm and it was secured that the batch temperature did not exceed 110 °C. Finally, the mixture was dropped from the internal mixer processed again on an open mill. The resulting vulcanizable compositions (green compounds) were cured between 8 and 14 minutes (Examples: 1B: 12 min, 2B: 8 min, 3B: 12 min, 4B: 8 min, 5B: 8 min, 6B: 8min, 7B: 12 min, 8B: 8 min, 9B: 10 min, 10B: 14 min, 11B: 13 min, 12B: 10 min) at a temperature of 165 °C.

Table 9: The rubber compositions using different carbon blacks as noted in table 1.

| | Unit | Composition |
|---|---|---|
| Rubber[12] | phr | 100 |
| Carbon black[13] | phr | 50 |
| ZnO[14] | phr | 3 |
| Stearic Acid[15] | phr | 2 |
| 6PPD[16] | phr | 1 |
| Sulfur[17] | phr | 1.5 |
| CBS[18] | phr | 1.5 |

[12]Rubber ESBR, Buna SB 1500, Resinex Deutschland GmbH
[13]Carbon black: Recovered carbon black 1, recovered carbon black 2 or recovered carbon black 3 (see table 7)
[14]ZnO, ZNO RS RAL 844 C, Norkem B.V.
[15]Stearic Acid, Palmera B 1804, Caldic Deutschland GmbH
[16]6PPD, VULKANOX 4020/LG, Brenntag GmbH
[17]Sulfur, MAHLSCHWEFEL 80/90° unbeölt, Avokal GmbH
[18]CBS, VULKACIT CZ/EG-C, Lanxess N.V.

The properties of the specimens are indicated in table 10.

Table 10: Properties of the specimens including the respective carbon black.

| Ex. | Tensile Strength[19]/ MPa | Elongation at Break[20] / % | Modulus[21] 300 % / MPa | Abrasion[22] / mm | Tear Resistance[23] (GRAVES) / N/mm | Topography relative peak area[24] 1% | Max Loss Factor[25] tan(d) |
|---|---|---|---|---|---|---|---|
| Comp. 1 | 19.9 | 643 | 6.4 | n.D. | n.D. | 3.82 | 0.142 |
| 2 | 17.1 | 536 | 8.6 | n.D. | n.D. | 0.93 | 0.126 |
| 3 | 17.5 | 545 | 8.8 | n.D. | n.D. | 1.32 | 0.117 |
| 4 | 18.7 | 543 | 8.9 | n.D. | n.D. | 1.02 | 0.115 |
| 5 | 19.9 | 584 | 8 | n.D. | n.D. | 1.05 | 0.126 |
| 6 | 18.8 | 550 | 8.3 | n.D. | n.D. | 1.09 | 0.117 |
| 7 | 18.7 | 607 | 6.5 | n.D. | n.D. | 3.19 | 0.130 |
| 8 | 19.4 | 572 | 8 | n.D. | n.D. | 0.98 | 0.125 |
| Comp. 9 | 26.3 | 618 | 6.9 | 96 | 19.1 | 2.76 | 0.150 |
| Comp. 10 | 27.2 | 680 | 6.3 | 108 | 21.3 | 0.38 | 0.174 |
| Comp. 11 | 23,3 | 631 | 6.7 | 111 | 17.9 | 1.01 | 0.142 |
| 12 | 21.3 | 610 | 8 | 117 | 18.8 | 0.86 | 0.138 |

[19]Tensile Strength was measured ISO 37 - 2012, S2.
[20]Elongation at Break was measured ISO 37 - 2012, S2.
[21]Modulus 300% was measured ISO 37 - 2012, S2.
[22]Abrasion was measured at 23 °C DIN ISO 4649:2014-03, 10 N.
[23]Tear Resistance GRAVES was measured DIN ISO 34-1:2016-09, method B, variant (b). [24]The relative peak area was measured
[25]Loss Factor tan(d) was measured as described below.

Loss factor tan(d)

The above-mentioned values and the loss factor tan(d) were measured according to DIN 53 513 in strain-controlled mode (1 ± 0.5 mm) or force-controlled mode (50 N ± 25 N) on a cylindrical specimen (10 mm in height and 10 mm in diameter) at 60°C with a frequency of 16 Hz.

Topography relative peak area

Topography relative peak area is a measure for filler dispersion determined by means of surface topography, inclusive of Medalia correction, according to the procedure described in A. Wehmeier, "Filler Dispersion Analysis by Topography Measurements", Technical Report TR 820, Degussa GmbH as well as in A. Wehmeier, "Entwicklung eines Verfahrens zur Charakterisierung der Füllstoffdispersion in Gummimischungen mittels einer Oberflachentopographie", Thesis, 1998 at the Münster University of Applied Sciences, and DE 199 17975 C2.

Results

The max loss factor tan(d) could be significantly increased. This is a hint that the coke which is generally present on the surface of the compared rCB has been removed. DeCoking improves the dispersability (relative peak area) and the tear resistance of the material, but negatively influences for example the abrasion (due to the higher ash content). For the rCB by FP also the tensile strength is improved.

It will be appreciated that various modifications can be made, and that many changes can be made in the preferred embodiments without departing from the principle of the invention.

**Claims**

1. A method for the recycling of carbon black comprising:

   (a) pyrolysis of particulate carbon black-containing feedstock at a temperature of 360 °C to 740 °C and in the absence of oxygen, wherein a pyrolysis gas stream and a pyrolyzed carbon black-containing particulate are obtained,
   (b) gasification of the pyrolyzed carbon black-containing particulate at a temperature of 750 °C to 950 °C,
   (c) obtaining treated carbon black after the gasification.

2. The method according to claim 1, wherein the pyrolysis (a) and gasification (b) are carried out in separate processes, and/or the pyrolysis (a) is carried out in a first reactor and the gasification (b) is carried out in a second reactor, wherein the first reactor and the second reactor are different reactors.

3. The process according to any one of claims 1 or 2, wherein the pyrolysis (a) and gasification (b) are carried out as a continuous process, and/or the pyrolysis (a) and gasification (b) are carried out in a multi-layered pyrolysis reactor, such as a multiple hearth furnace.

4. The method according to any one of the preceding claims, wherein the pyrolysis of particulate carbon black-containing feedstock is carried out at a temperature of 380 °C to 730 °C, preferably 400 to 680 °C, more preferably 450 to 650 °C, and most preferably 490 to 600 °C.

5. The method according to any one of the preceding claims, wherein the pyrolysis and the gasification is carried out in a fluidized bed reactor, rotary kiln and/or in a multi-layered pyrolysis reactor.

6. The method according to any one of the preceding claims, wherein the atmosphere during the pyrolysis for the particulate carbon black-containing feedstock comprises less than 20 mol.-% $H_2O$, such as less than 15 mol.-% $H_2O$, less than 10 mol.-% $H_2O$, less than 5 mol.-% $H_2O$, less than 3 mol.-% $H_2O$, less than 2 mol.-% $H_2O$, or less than 1 mol.-% $H_2O$, based on the total volume of the atmosphere during the pyrolysis.

7. The method according to any one of the preceding claims, wherein the particulate carbon black-containing feedstock comprises (or is) rubber granulate, plastic granulate, and/or biomass-based granulate, preferably the particulate carbon black-containing feedstock comprises rubber granulate comprising carbon black.

8. The method according to any one of the preceding claims, wherein at least 50 wt.-%, preferably at least 60 wt.-%, more preferably at least 70 wt.-%, most preferably at least 80 wt.-%, of the particulate carbon-containing feedstock has a particle size of more than 2 to 2.8 mm, wherein the particle size is measured according to ASTM D 1511-12 (2017) using an additional U.S. Standard Sieves or equivalent, conforming to Specification ASTM E11, Sieve Nos. 7, having openings of 2800 $\mu$m. The sieves shall be 25 mm in height and 200 mm in diameter.

9. The method according to any one of the preceding claims, wherein the gasification is carried out for 1 min to 10 h, preferably 10 min to 5 h, more preferably 20 min to 3 h, even more preferably 30 min to 2 h, and most preferably 40 min to 1.5 h.

10. The process according to any one of claims 1 or 2, wherein the gasification is carried out at a temperature of 750 °C to 910 °C, preferably 760 °C to 900 °C, more preferably 770 to 890 °C, even more preferably 780 °C to 860 °C, and most preferably 790 to 850 °C.

11. The method according to any one of the preceding claims, wherein the gasification is carried out by subjecting the material with a gas comprising $H_2O$ and/or $CO_2$, preferably $H_2O$, preferably wherein the gasification is carried out by subjecting the material with a gas comprising 20 to 100 mol-% $H_2O$ and/or $CO_2$, preferably 30 to 100 mol-% $H_2O$ and/or $CO_2$, more preferably 40 to 90 mol-% $H_2O$ and/or $CO_2$, most preferably 50 to 80 mol-% $H_2O$ and/or $CO_2$, based on the total number of moles of the gas.

12. The process according to any one of the preceding claims, wherein treated carbon black has a coke content below 15 wt.-%, preferably below 10 wt.-%, more preferably below 5 wt.-%, and most preferably below 1 wt.-%, based on the total weight of the treated carbon black, is obtained after the gasification.

13. Use of a multiple hearth furnace for the pyrolysis and gasification of rubber granulate, such as waste tire rubber granulate.

14. Treated carbon black, preferably defined according to anyone of the previous claims, wherein the treated carbon black has a transmittance of at least 80 %, preferably at least 85 %, more preferably at least 90 %, even more preferably at least 95 %, most preferably at least 98 % wherein the transmittance at 355 nm in toluene is measured according to ASTM D 1618-18 against toluene, wherein the transmittance is measured at 355 nm instead of 425 nm.

15. A rubber article comprising the treated carbon black according to anyone of the preceding claims.

FIG. 1

FIG. 2

FIG. 3

FIG. 4

EP 4 582 377 A1

FIG. 5

FIG. 6

## EUROPEAN SEARCH REPORT

Application Number

EP 24 15 0498

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 369 798 A1 (GULBA MIROSLAW [PL]; PRZERWA JERZY [PL]) 5 September 2018 (2018-09-05) * claim 1 * * the whole document * | 13-15 | INV. C01B32/30 C09C1/48 |
| X | P'YANOVA L. G. ET AL: "The influence of gasification conditions of carbon black on the change in texture characteristics", INTERNATIONAL CONFERENCE ON PHYSICS AND CHEMISTRY OF COMBUSTION AND PROCESSES IN EXTREME ENVIRONMENTS (COMPHYSCHEM'20-21) AND VI INTERNATIONAL SUMMER SCHOOL "MODERN QUANTUM CHEMISTRY METHODS IN APPLICATIONS", vol. 2304, 8 December 2020 (2020-12-08), pages 040012-040018, XP93184399, DOI: 10.1063/5.0033438 Retrieved from the Internet: URL:https://pubs.aip.org/aip/acp/article-p df/doi/10.1063/5.0033438/14220828/040012_1 _online.pdf> * table 1 and the following paragraph. results and discussion. introduction, particularly 1st and 3rd paragraph.; table 1 * * the whole document * | 1-15 | |
| X | EP 0 768 345 A2 (MITSUBISHI HEAVY IND LTD [JP]) 16 April 1997 (1997-04-16) * claims 1-4 * * the whole document * | 1-15 | TECHNICAL FIELDS SEARCHED (IPC) C01B C09C |
| X | EP 1 207 190 A2 (MITSUBISHI HEAVY IND LTD [JP]) 22 May 2002 (2002-05-22) * paragraphs [0022] - [0028]; figures 1, 2 * * the whole document * | 1-15 | |

The present search report has been drawn up for all claims

| Place of search | Date of completion of the search | Examiner |
|---|---|---|
| The Hague | 15 July 2024 | Straub, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 24 15 0498

15-07-2024

| Patent document cited in search report | | Publication date | Patent family member(s) | | Publication date |
|---|---|---|---|---|---|
| EP 3369798 | A1 | 05-09-2018 | EP | 3369798 A1 | 05-09-2018 |
| | | | PL | 241453 B1 | 03-10-2022 |
| | | | PL | 3369798 T3 | 29-11-2019 |
| EP 0768345 | A2 | 16-04-1997 | DE | 69611145 T2 | 10-05-2001 |
| | | | EP | 0768345 A2 | 16-04-1997 |
| | | | JP | 3402877 B2 | 06-05-2003 |
| | | | JP | H09104830 A | 22-04-1997 |
| | | | KR | 970020230 A | 28-05-1997 |
| | | | US | 5961946 A | 05-10-1999 |
| EP 1207190 | A2 | 22-05-2002 | DE | 69535215 T2 | 23-08-2007 |
| | | | EP | 1207190 A2 | 22-05-2002 |
| | | | ES | 2270938 T3 | 16-04-2007 |
| | | | JP | 3377630 B2 | 17-02-2003 |
| | | | JP | H08157838 A | 18-06-1996 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20020117388 A1
- DE 19917975 C2

**Non-patent literature cited in the description**

- **J.-B. DONNET et al.** Carbon Black:Science and Technology
- **SUDIP K. SAMANTA ; OM V. SINGH ; RAKESH K. JAIN**. Polycyclic aromatic hydrocarbons: environmental pollution and bioremediation. *TRENDS in Biotechnology*, June 2002, vol. 20 (6), 243-248
- **W. HOFMANN**. Rubber Technology Handbook. Hanser Verlag, 1994
- Determination of PAH content of Carbon Black. Cabot Corp., 08 July 1994
- **A. WEHMEIER**. Filler Dispersion Analysis by Topography Measurements. *Technical Report TR*, vol. 820
- Entwicklung eines Verfahrens zur Charakterisierung der Füllstoffdispersion in Gummimischungen mittels einer Oberflachentopographie. **A. WEHMEIER**. Thesis. Münster University of Applied Sciences, 1998